# EUROPEAN PATENT APPLICATION

(11) **EP 4 525 536 A1**
(43) Date of publication of application: **19.03.2025**
(21) Application number: 23810732.0
(22) Date of filing: 23.04.2023
(51) Int. Cl.: H04W 72/04

(54) **INFORMATION TRANSMISSION METHOD AND APPARATUS, AND COMMUNICATION SYSTEM**

(30) Priority: 27.05.2022 CN 202210592317; 06.04.2023 CN 202310405032
(71) Applicant: Huawei Technologies Co., Ltd., Shenzhen, Guangdong 518129 (CN)
(72) Inventor: LI, Xiangyu, Shenzhen, Guangdong 518129 (CN); PENG, Wenjie, Shenzhen, Guangdong 518129 (CN)
(74) Representative: Goddar, Heinz J.
(86) International application number: PCT/CN2023/090111
(87) International publication number: WO 2023/226659

(57) **Abstract**

This application relates to the field of wireless communication technologies, and provides an information transmission method, an apparatus, and a communication system, to improve communication quality. In the method, a first terminal device receives first indication information from a second terminal device. The first indication information indicates capability information of the second terminal device, and the capability information of the second terminal device includes information indicating that the second terminal device supports multi-path relay and/or information indicating that the second terminal device supports single-path relay. The first terminal device sends second indication information to a network device. The second indication information indicates the capability information of the second terminal device. Based on the foregoing solution, the first terminal device may report the capability information of the second terminal device to the network device by using the second indication information. The network device may configure, by using the capability information of the second terminal device, the first terminal device to perform single-path relay or multi-path relay. This avoids a case in which the first terminal device fails to perform multi-path relay or path switch, and improves relay communication quality.

## Description

### CROSS-REFERENCE TO RELATED APPLICATIONS

This application claims priorities to Chinese Patent Application No. 202210592317.3, filed with the China National Intellectual Property Administration on May 27, 2022 and entitled "INFORMATION TRANSMISSION METHOD, APPARATUS, AND COMMUNICATION SYSTEM", and to Chinese Patent Application No. 202310405032.9, filed with the China National Intellectual Property Administration on April 6, 2023 and entitled "INFORMATION TRANSMISSION METHOD AND APPARATUS", both of which are incorporated herein by reference in their entireties.

### TECHNICAL FIELD

This application relates to the field of wireless communication technologies, and in particular, to an information transmission method, an apparatus, and a communication system.

### BACKGROUND

In a scenario in which terminal device-to-network (UE-to-network, U2N) relay (relay) communication is introduced, a relay terminal device communicates with a remote terminal device over a sidelink. When data transmission is required between the remote terminal device and a network device, the relay terminal device may receive uplink data of the remote terminal device and send the uplink data to the network device, and correspondingly, the relay terminal device may receive downlink data of the remote terminal device and send the downlink data to the remote terminal device.

Currently, U2N relay supports only a single-path relay (single-path U2N relay or U2N relay path switch) scenario. To improve a communication rate and reliability of U2N relay, multi-path U2N relay (multi-path U2N relay) may be introduced. However, not all relay terminal devices support multi-path relay. As a result, a configuration failure may occur, and communication quality is affected.

### SUMMARY

This application provides an information transmission method, an apparatus, and a communication system, to improve communication quality.

According to a first aspect, an information transmission method is provided. The method may be performed by a first terminal device, or may be performed by a chip having a function similar to that of the first terminal device. The first terminal device may be a remote terminal device. In the method, the first terminal device receives the first indication information from a second terminal device. The first indication information indicates capability information of the second terminal device, and the capability information of the second terminal device includes information indicating that the second terminal device supports multi-path relay and/or information indicating that the second terminal device supports single-path relay. The first terminal device sends second indication information to a network device. The second indication information indicates the capability information of the second terminal device.

Based on the foregoing solution, the first terminal device may report the capability information of the second terminal device to the network device by using the second indication information. The network device may configure, by using the capability information of the second terminal device, the first terminal device to perform single-path relay or multi-path relay. This avoids a case in which the first terminal device fails to perform multi-path relay or path switch, and improves relay communication quality, for example, improve U2N relay communication quality.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible case, the first terminal device may receive connection state information from the second terminal device. The connection state information may include one of an RRC connected state, an RRC inactive state, and an RRC idle state.

In an example, when the second terminal device is in the RRC inactive state or the RRC idle state, the first terminal device may send the second indication information to the network device.

In another example, when the second terminal device is in the RRC connected state, the first terminal device may not send the second indication information to the network device. Optionally, when the second terminal device is in the RRC connected state, the first terminal device may send an identifier of the second terminal device to the network device.

Based on the foregoing solution, the first terminal device may report the identifier of the second terminal device to the network device, and the network device may determine, based on the identifier of the second terminal device, whether the second terminal device reports the capability information, to configure, by using the identifier of the second terminal device, the first terminal device to perform single-path relay or multi-path relay. This avoids a case in which the first terminal device fails to perform multi-path relay or path switch, and improves U2N relay communication quality.

In a possible implementation, the first terminal device sends the identifier of the second terminal device to the network device. The identifier of the second terminal device is associated with the second indication information.

Based on the foregoing solution, the first terminal device may report the capability information of the second terminal device to the network device by using the identifier of the second terminal device, so that the network device configures, by using the identifier of the second terminal device, the first terminal device to perform single-path relay or multi-path relay. This avoids a case in which the first terminal device fails to perform multi-path relay or path switch, and improves U2N relay communication quality.

In a possible implementation, the identifier of the second terminal device includes a source layer 2 identifier of the second terminal device.

In a possible implementation, the first terminal device sends request information to the network device, where the request information is used to request to perform multi-path relay.

In a possible implementation, the first terminal device receives first configuration information from the network device, where the first configuration information indicates the first terminal device to perform multi-path relay or single-path relay, and the first configuration information includes the identifier of the second terminal device.

Based on the foregoing solution, the network device may configure, by using the capability information of the second terminal device, the second terminal device to perform single-path relay or multi-path relay. This avoids a case in which the first terminal device fails to perform multi-path relay or path switch, and improves U2N relay communication quality.

In a possible implementation, a destination layer 2 identifier of a first message is associated with the first indication information, and the first message is used to discover the second terminal device. In a possible case, a correspondence between the destination layer 2 identifier and the capability information of the second terminal device may be stored by using a predefined table. Optionally, the first terminal device may store the table.

Based on the foregoing solution, the first terminal device may obtain the capability information of the second terminal device by using the destination layer 2 identifier of the first message, in other words, the first terminal device may obtain the capability information of the second terminal device in a discovery (discovery) process. Therefore, the first terminal device may send the capability information of the second terminal device to the network device.

In a possible implementation, the first message includes the first indication information. For example, the first message may include bit information, where the bit information indicates the capability information of the second terminal device. For another example, the first message may include a service code (service code), where the service code indicates the capability information of the second terminal device.

Based on the foregoing solution, the first terminal device may obtain the capability information of the second terminal device by using the first indication information included in the first message, in other words, the first terminal device may obtain the capability information of the second terminal device in a discovery (discovery) process. Therefore, the first terminal device may send the capability information of the second terminal device to the network device.

In a possible implementation, the first terminal device determines the second indication information based on the first indication information. For example, when the first indication information indicates the second terminal device to support multi-path relay, the second indication information may indicate the second terminal device to support multi-path relay. For another example, when the first indication information indicates the second terminal device to support single-path relay, the second indication information may indicate the second terminal device to support single-path relay. For another example, when the first indication information indicates the second terminal device to support single-path relay and multi-path relay, the second indication information may indicate the second terminal device to support single-path relay and multi-path relay.

Based on the foregoing solution, the first terminal device may determine, by using the capability information that is of the second terminal device and that is indicated by the first indication information, the second indication information, for indicating the capability information of the second terminal device to the network device.

In a possible implementation, the first terminal device receives third indication information from the network device, where the third indication information indicates capability information of the network device, and the capability information of the network device includes information indicating that the network device supports multi-path relay and/or information indicating that the network device supports single-path relay.

In a possible implementation, when the capability information of the network device includes the information indicating that the network device supports multi-path relay, the first terminal device sends the second indication information to the network device.

Based on the foregoing solution, when the capability information of the network device includes the information that the network device supports multi-path relay, the first terminal device sends the second indication information to the network device. This can reduce unnecessary transmission and save transmission resources.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a second aspect, an information transmission method is provided. The method may be performed by a second terminal device, or may be performed by a chip having a function similar to that of the second terminal device. Optionally, the second terminal device may be a relay terminal device. In the method, the second terminal device determines first indication information. The first indication information indicates capability information of the second terminal device, and the capability information of the second terminal device includes information indicating that the second terminal device supports multi-path relay and/or information indicating that the second terminal device supports single-path relay. The second terminal device sends the first indication information to a first terminal device.

Based on the foregoing solution, the second terminal device may indicate the capability information of the second terminal device to the first terminal device by using the first indication information, so that the first terminal device sends the capability information of the second terminal device to a network device, and the network device configures the first terminal device to perform single-path relay or multi-path relay. This avoids a case in which the first terminal device fails to perform multi-path relay or path switch, and improves U2N relay communication quality.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible case, the second terminal device may send connection state information to the first terminal device. The connection state information may include one of an RRC connected state, an RRC inactive state, and an RRC idle state.

In a possible implementation, a destination layer 2 identifier of a first message is associated with the first indication information, and the first message is used to discover the second terminal device. In a possible case, a correspondence between the destination layer 2 identifier and the capability information of the second terminal device may be stored by using a predefined table. Optionally, the first terminal device may store the table.

Based on the foregoing solution, the first terminal device may obtain the capability information of the second terminal device by using the destination layer 2 identifier of the first message, in other words, the first terminal device may obtain the capability information of the second terminal device in a discovery (discovery) process. Therefore, the first terminal device may send the capability information of the second terminal device to the network device.

In a possible implementation, the first message includes the first indication information. For example, the first message may include bit information, where the bit information indicates the capability information of the second terminal device. For another example, the first message may include a service code (service code), where the service code indicates the capability information of the second terminal device.

Based on the foregoing solution, the first terminal device may obtain the capability information of the second terminal device by using the first indication information included in the first message, in other words, the first terminal device may obtain the capability information of the second terminal device in a discovery (discovery) process. Therefore, the first terminal device may send the capability information of the second terminal device to the network device.

In a possible implementation, the first indication information is indicated by the network device. In a possible implementation, the first indication information is determined based on at least one of a quantity of unicast connections and a channel busy ratio.

Based on the foregoing solution, the second terminal device may determine the first indication information based on the indication of the network device, and the at least one of the quantity of the unicast connections and the channel busy ratio.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a third aspect, an information transmission method is provided. The method may be performed by a network device or a chip having a function similar to that of the network device. In the method, the network device receives second indication information from a first terminal device, where the second indication information indicates capability information of a second terminal device, and the capability information of the second terminal device includes information indicating that the second terminal device supports multi-path relay and/or information indicating that the second terminal device supports single-path relay. The network device sends first configuration information to the first terminal device, where the first configuration information indicates the first terminal device to perform multi-path relay or single-path relay, and the first configuration information includes an identifier of the second terminal device.

Based on the foregoing solution, the first terminal device may report the capability information of the second terminal device to the network device by using the second indication information. The network device may configure, by using the capability information of the second terminal device, the first terminal device to perform single-path relay or multi-path relay. This avoids a case in which the first terminal device fails to perform path switch or multi-path relay, and improves U2N relay communication quality.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the network device receives the identifier of the second terminal device. The identifier of the second terminal device is associated with the second indication information.

Based on the foregoing solution, the first terminal device may report the capability information of the second terminal device to the network device by using the identifier of the second terminal device, so that the network device configures, by using the identifier of the second terminal device, the first terminal device to perform single-path relay or multi-path relay. This avoids a case in which the first terminal device fails to perform multi-path relay or path switch, and improves U2N relay communication quality.

In a possible implementation, the identifier of the second terminal device includes a source layer 2 identifier of the second terminal device.

In a possible implementation, the network device receives request information from the first terminal device, where the request information is used to request to perform multi-path relay.

In a possible implementation, a destination layer 2 identifier of a first message is associated with first indication information, and the first message is used to discover the second terminal device.

In a possible implementation, the first message includes the first indication information. For example, the first message may include bit information, where the bit information indicates the capability information of the second terminal device. For another example, the first message may include a service code (service code), where the service code indicates the capability information of the second terminal device.

In a possible implementation, the network device sends third indication information to the first terminal device, where the third indication information indicates capability information of the network device, and the capability information of the network device includes information indicating that the network device supports multi-path relay and/or information indicating that the network device supports single-path relay.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a fourth aspect, an information transmission method is provided. The method may be performed by a second terminal device, or may be performed by a chip having a function similar to that of the second terminal device. Optionally, the second terminal device may be a remote terminal device or a relay terminal device. In the method, the second terminal device sends first indication information to a network device, where the first indication information indicates capability information of the second terminal device, and the capability information of the second terminal device includes information indicating that the second terminal device supports multi-path relay and/or information indicating that the second terminal device supports single-path relay. The second terminal device receives second configuration information from the network device, where the second configuration information indicates the second terminal device to perform multi-path relay or single-path relay.

Based on the foregoing solution, the second terminal device may indicate the capability information of the second terminal device to the network device by using the first indication information, so that the network device configures the second terminal device to perform single-path relay or multi-path relay. This avoids a case in which the second terminal device fails to perform path switch or multi-path relay, and improves U2N relay communication quality.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the second terminal device sends an identifier of the second terminal device to the network device. The identifier of the second terminal device is associated with the first indication information.

Based on the foregoing solution, the second terminal device may report the capability information of the second terminal device to the network device by using the identifier of the second terminal device, so that the network device configures, by using the identifier of the second terminal device, the second terminal device to perform single-path relay or multi-path relay. This avoids a case in which the first terminal device fails to perform path switch or multi-path relay, and improves U2N relay communication quality.

In a possible implementation, the identifier of the second terminal device includes a source layer 2 identifier of the second terminal device.

In a possible implementation, the second terminal device receives third indication information from the network device, where the third indication information indicates capability information of the network device, and the capability information of the network device includes information indicating that the network device supports multi-path relay and/or information indicating that the network device supports single-path relay.

In a possible implementation, when the capability information of the network device includes the information indicating that the network device supports multi-path relay, the second terminal device sends the first indication information to the network device.

Based on the foregoing solution, when the capability information of the network device includes the information that the network device supports multi-path relay, the second terminal device sends the second indication information to the network device. This can reduce unnecessary transmission and save transmission resources.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a fifth aspect, an information transmission method is provided. The method may be performed by a network device or a chip having a function similar to that of the network device. In the method, the network device receives first indication information from a second terminal device, where the first indication information indicates capability information of the second terminal device, and the capability information of the second terminal device includes information indicating that the second terminal device supports multi-path relay and/or information indicating that the second terminal device supports single-path relay. The network device sends second configuration information to the second terminal device, where the second configuration information indicates the second terminal device to perform multi-path relay or single-path relay.

Based on the foregoing solution, the second terminal device may indicate the capability information of the second terminal device to the network device by using the first indication information, so that the network device configures the second terminal device to perform single-path relay or multi-path relay. This avoids a case in which the second terminal device fails to perform multi-path relay or path switch, and improves U2N relay communication quality.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the network device receives an identifier of the second terminal device from the second terminal device. The identifier of the second terminal device is associated with the first indication information.

Based on the foregoing solution, the second terminal device may report the capability information of the second terminal device to the network device by using the identifier of the second terminal device, so that the network device configures, by using the identifier of the second terminal device, the second terminal device to perform single-path relay or multi-path relay. This avoids a case in which a first terminal device fails to perform multi-path relay or path switch, and improves U2N relay communication quality.

In a possible implementation, the identifier of the second terminal device includes a source layer 2 identifier of the second terminal device.

In a possible implementation, the network device receives a measurement report message from the first terminal device, where the measurement report message includes the identifier of the second terminal device. The second configuration information is determined based on the identifier of the second terminal device and the first indication information.

In a possible implementation, the network device sends third indication information to the second terminal device, where the third indication information indicates capability information of the network device, and the capability information of the network device includes information indicating that the network device supports multi-path relay and/or information indicating that the network device supports single-path relay.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a sixth aspect, a communication apparatus is provided, and includes a processing unit and a transceiver unit.

The transceiver unit is configured to receive first indication information from a second terminal device. The first indication information indicates capability information of the second terminal device, and the capability information of the second terminal device includes information indicating that the second terminal device supports multi-path relay and/or information indicating that the second terminal device supports single-path relay. The processing unit is configured to generate second indication information, where the second indication information indicates the capability information of the second terminal device. The transceiver unit is further configured to send the second indication information to a network device.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible case, the transceiver unit is further configured to receive connection state information from the second terminal device. The connection state information may include one of an RRC connected state, an RRC inactive state, and an RRC idle state.

In an example, when the second terminal device is in the RRC inactive state or the RRC idle state, the transceiver unit may send the second indication information to the network device.

In another example, when the second terminal device is in the RRC connected state, the communication apparatus may not send the second indication information to the network device. Optionally, when the second terminal device is in the RRC connected state, the transceiver unit is further configured to send an identifier of the second terminal device to the network device.

In a possible implementation, the transceiver unit is further configured to send the identifier of the second terminal device to the network device. The identifier of the second terminal device is associated with the second indication information.

In a possible implementation, the identifier of the second terminal device includes a source layer 2 identifier of the second terminal device.

In a possible implementation, the transceiver unit is further configured to send request information to the network device, where the request information is used to request to perform multi-path relay.

In a possible implementation, the transceiver unit is further configured to receive first configuration information from the network device, where the first configuration information indicates a first terminal device to perform multi-path relay or single-path relay, and the first configuration information includes the identifier of the second terminal device.

In a possible implementation, a destination layer 2 identifier of a first message is associated with the first indication information, and the first message is used to discover the second terminal device. In a possible case, a correspondence between the destination layer 2 identifier and the capability information of the second terminal device may be stored by using a predefined table. Optionally, the first terminal device may store the table.

In a possible implementation, the first message includes the first indication information. For example, the first message may include bit information, where the bit information indicates the capability information of the second terminal device. For another example, the first message may include a service code (service code), where the service code indicates the capability information of the second terminal device.

In a possible implementation, the processing unit is further configured to determine the second indication information based on the first indication information. For example, when the first indication information indicates the second terminal device to support multi-path relay, the second indication information may indicate the second terminal device to support multi-path relay. For another example, when the first indication information indicates the second terminal device to support single-path relay, the second indication information may indicate the second terminal device to support single-path relay. For another example, when the first indication information indicates the second terminal device to support single-path relay and multi-path relay, the second indication information may indicate the second terminal device to support single-path relay and multi-path relay.

In a possible implementation, the transceiver unit is further configured to receive third indication information from the network device, where the third indication information indicates capability information of the network device, and the capability information of the network device includes information indicating that the network device supports multi-path relay and/or information indicating that the network device supports single-path relay.

In a possible implementation, the transceiver unit is specifically configured to: when the capability information of the network device includes the information indicating that the network device supports multi-path relay, send the second indication information to the network device.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a seventh aspect, a communication apparatus is provided, and includes a processing unit and a transceiver unit.

The processing unit is configured to determine first indication information. The first indication information indicates capability information of a second terminal device, and the capability information of the second terminal device includes information indicating that the second terminal device supports multi-path relay and/or information indicating that the second terminal device supports single-path relay. The transceiver unit is configured to send the first indication information to a first terminal device.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible case, the transceiver unit is further configured to send connection state information to the first terminal device. The connection state information may include one of an RRC connected state, an RRC inactive state, and an RRC idle state.

In a possible implementation, a destination layer 2 identifier of a first message is associated with the first indication information, and the first message is used to discover the second terminal device. In a possible case, a correspondence between the destination layer 2 identifier and the capability information of the second terminal device may be stored by using a predefined table. Optionally, the first terminal device may store the table.

In a possible implementation, the first message includes the first indication information. For example, the first message may include bit information, where the bit information indicates the capability information of the second terminal device. For another example, the first message may include a service code (service code), where the service code indicates the capability information of the second terminal device.

In a possible implementation, the first indication information is indicated by a network device. In a possible implementation, the first indication information is determined based on at least one of a quantity of unicast connections and a channel busy ratio.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to an eighth aspect, a communication apparatus is provided, and includes a processing unit and a transceiver unit.

The transceiver unit is configured to receive second indication information from a first terminal device, where the second indication information indicates capability information of a second terminal device, and the capability information of the second terminal device includes information indicating that the second terminal device supports multi-path relay and/or information indicating that the second terminal device supports single-path relay. The processing unit is configured to generate first configuration information, where the first configuration information indicates the first terminal device to perform multi-path relay or single-path relay, and the first configuration information includes an identifier of the second terminal device. The transceiver unit is further configured to send the first configuration information to the first terminal device.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the transceiver unit is further configured to receive the identifier of the second terminal device. The identifier of the second terminal device is associated with the second indication information.

In a possible implementation, the identifier of the second terminal device includes a source layer 2 identifier of the second terminal device.

In a possible implementation, the transceiver unit is further configured to receive request information from the first terminal device, where the request information is used to request to perform multi-path relay.

In a possible implementation, a destination layer 2 identifier of a first message is associated with the first indication information, and the first message is used to discover the second terminal device.

In a possible implementation, the first message includes the first indication information. For example, the first message may include bit information, where the bit information indicates the capability information of the second terminal device. For another example, the first message may include a service code (service code), where the service code indicates the capability information of the second terminal device.

In a possible implementation, the transceiver unit is further configured to send third indication information to the first terminal device, where the third indication information indicates capability information of a network device, and the capability information of the network device includes information indicating that the network device supports multi-path relay and/or information indicating that the network device supports single-path relay.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a ninth aspect, a communication apparatus is provided, and includes a processing unit and a transceiver unit.

The processing unit is configured to generate first indication information. The transceiver unit is configured to send the first indication information to a network device, where the first indication information indicates capability information of a second terminal device, and the capability information of the second terminal device includes information indicating that the second terminal device supports multi-path relay and/or information indicating that the second terminal device supports single-path relay. The transceiver unit is further configured to receive second configuration information from the network device, where the second configuration information indicates the second terminal device to perform multi-path relay or single-path relay.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the transceiver unit is further configured to send an identifier of the second terminal device to the network device. The identifier of the second terminal device is associated with the first indication information.

In a possible implementation, the identifier of the second terminal device includes a source layer 2 identifier of the second terminal device.

In a possible implementation, the transceiver unit is further configured to receive third indication information from the network device, where the third indication information indicates capability information of the network device, and the capability information of the network device includes information indicating that the network device supports multi-path relay and/or information indicating that the network device supports single-path relay.

In a possible implementation, the transceiver unit is specifically configured to: when the capability information of the network device includes the information indicating that the network device supports multi-path relay, send the first indication information to the network device.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to a tenth aspect, a communication apparatus is provided, and includes a processing unit and a transceiver unit.

The transceiver unit is configured to receive first indication information from a second terminal device, where the first indication information indicates capability information of the second terminal device, and the capability information of the second terminal device includes information indicating that the second terminal device supports multi-path relay and/or information indicating that the second terminal device supports single-path relay. The processing unit is configured to generate second configuration information. The transceiver unit is further configured to send the second configuration information to the second terminal device, where the second configuration information indicates the second terminal device to perform multi-path relay or single-path relay.

In an example, the capability information of the second terminal device may include the information indicating that the second terminal device supports multi-path relay. In another example, the capability information of the second terminal device may include the information indicating that the second terminal device supports single-path relay. In still another example, the capability information of the second terminal device may include the information indicating that the second terminal device supports single-path relay and the information indicating that the second terminal device supports multi-path relay.

In a possible implementation, the transceiver unit is further configured to receive an identifier of the second terminal device from the second terminal device. The identifier of the second terminal device is associated with the first indication information.

In a possible implementation, the identifier of the second terminal device includes a source layer 2 identifier of the second terminal device.

In a possible implementation, the transceiver unit is further configured to receive a measurement report message from a first terminal device, where the measurement report message includes the identifier of the second terminal device. The second configuration information is determined based on the identifier of the second terminal device and the first indication information.

In a possible implementation, the transceiver unit is further configured to send third indication information to the second terminal device, where the third indication information indicates capability information of a network device, and the capability information of the network device includes information indicating that the network device supports multi-path relay and/or information indicating that the network device supports single-path relay.

In a possible implementation, that the second terminal device supports multi-path relay includes: The second terminal device supports the first terminal device in communicating with the network device through the second terminal device, and supports the first terminal device in directly communicating with the network device. Alternatively, the second terminal device supports the first terminal device in communicating with the network device through the second terminal device, and supports the first terminal device in communicating with the network device through a third terminal device. That the second terminal device supports single-path relay includes: The second terminal device supports the first terminal device in communicating with the network device through the second terminal device.

According to an eleventh aspect, an embodiment of this application provides a communication apparatus. The communication apparatus may be the communication apparatus according to any one of the sixth aspect to the tenth aspect in the foregoing embodiments, or a chip disposed in the communication apparatus according to any one of the sixth aspect and the tenth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the first terminal device or the second terminal device in the method embodiment in any one of the first aspect to the fifth aspect.

It should be understood that the communication interface may be implemented by using an antenna, a feeder, a codec, or the like in the communication apparatus. Alternatively, if the communication apparatus is a chip disposed in a communication device at a transmit end or in a communication device at a receive end, the communication interface may be an input/output interface of the chip, for example, an input/output pin. The communication apparatus may further include a transceiver, configured to communicate between the communication apparatus and another device. For example, when the communication apparatus is a first terminal device, the another device is a second terminal device or a network device. Alternatively, when the communication apparatus is a second terminal device, the another device is a first terminal device or a network device. Alternatively, when the communication apparatus is a network device, the another device is a first terminal device or a second terminal device.

According to a twelfth aspect, this application provides a communication apparatus, including a logic circuit and an input/output interface.

For example, the input/output interface is configured to input first indication information from a second terminal device. The first indication information indicates capability information of the second terminal device, and the capability information of the second terminal device includes information indicating that the second terminal device supports multi-path relay and/or information indicating that the second terminal device supports single-path relay. The logic circuit is configured to generate second indication information, where the second indication information indicates the capability information of the second terminal device. The input/output interface is further configured to output the second indication information to a network device.

For example, the logic circuit is configured to determine the first indication information. The first indication information indicates the capability information of the second terminal device, and the capability information of the second terminal device includes the information indicating that the second terminal device supports multi-path relay and/or the information indicating that the second terminal device supports single-path relay. The input/output interface is configured to output the first indication information to a first terminal device.

For example, the input/output interface is configured to input the second indication information from the first terminal device, where the second indication information indicates the capability information of the second terminal device, and the capability information of the second terminal device includes the information indicating that the second terminal device supports multi-path relay and/or the information indicating that the second terminal device supports single-path relay. The logic circuit is configured to generate first configuration information, where the first configuration information indicates the first terminal device to perform multi-path relay or single-path relay, and the first configuration information includes an identifier of the second terminal device. The input/output interface is further configured to output the first configuration information to the first terminal device.

For example, the logic circuit is configured to generate the first indication information. The input/output interface is configured to output the first indication information to the network device, where the first indication information indicates the capability information of the second terminal device, and the capability information of the second terminal device includes the information indicating that the second terminal device supports multi-path relay and/or the information indicating that the second terminal device supports single-path relay. The input/output interface is further configured to input second configuration information from the network device, where the second configuration information indicates the second terminal device to perform multi-path relay or single-path relay.

For example, the input/output interface is configured to input the first indication information from the second terminal device, where the first indication information indicates the capability information of the second terminal device, and the capability information of the second terminal device includes the information indicating that the second terminal device supports multi-path relay and/or the information indicating that the second terminal device supports single-path relay. The logic circuit is configured to generate the second configuration information. The input/output interface is further configured to output second configuration information to the second terminal device, where the second configuration information indicates the second terminal device to perform multi-path relay or single-path relay.

According to a thirteenth aspect, an embodiment of this application provides a chip system. The chip system includes a processor, may further include a memory, and is configured to implement the possible implementations of any one of the first aspect to the fifth aspect. In a possible implementation, the chip system further includes the memory, configured to store program instructions and/or data. The chip system may include a chip, or may include a chip and another discrete component.

According to a fourteenth aspect, an embodiment of this application provides a communication system. The communication system includes the communication apparatus according to the sixth aspect and the communication apparatus according to the seventh aspect, the communication system includes the communication apparatus according to the sixth aspect, the communication apparatus according to the seventh aspect, and the communication apparatus according to the eighth aspect, or the communication system includes the communication apparatus according to the ninth aspect and the communication apparatus according to the tenth aspect.

According to a fifteenth aspect, this application provides a computer-readable storage medium. The computer-readable storage medium stores a computer program or instructions. When the computer program or the instructions are run, the method performed by the first terminal device, the second terminal device, or the network device in the foregoing aspects is implemented.

According to a sixteenth aspect, a computer program product is provided. The computer program product includes computer program code or instructions. When the computer program code or the instructions are run, the method performed by the first terminal device in the foregoing aspects is performed, the method performed by the second terminal device in the foregoing aspects is performed, or the method performed by the network device in the foregoing aspects is performed.

For beneficial effects of the sixth aspect to the sixteenth aspect and the implementations thereof, refer to the descriptions of beneficial effects of the methods according to the first aspect to the fifth aspect and the implementations thereof.

### BRIEF DESCRIPTION OF DRAWINGS

FIG. 1 is a diagram of a V2X communication system 100;
FIG. 2 is a diagram of a U2N relay scenario according to an embodiment of this application;
FIG. 3 is a diagram of direct communication and indirect communication of a remote UE according to an embodiment of this application;
FIG. 4 is a diagram in which a network device configures a remote UE to perform multi-path relay according to an embodiment of this application;
FIG. 5 is a diagram in which a network device configures a remote UE to perform single-path relay according to an embodiment of this application;
FIG. 6 is an example flowchart of an information transmission method according to an embodiment of this application;
FIG. 7 is an example flowchart of an information transmission method according to an embodiment of this application;
FIG. 8 is an example flowchart of an information transmission method according to an embodiment of this application;
FIG. 9 is an example flowchart of an information transmission method according to an embodiment of this application;
FIG. 10 is an example flowchart of an information transmission method according to an embodiment of this application;
FIG. 11 is a block diagram of a communication apparatus according to an embodiment of this application;
FIG. 12 is a block diagram of a communication apparatus according to an embodiment of this application;
FIG. 13 is a diagram of a communication apparatus according to an embodiment of this application; and
FIG. 14 is a block diagram of a communication apparatus according to an embodiment of this application.

### DESCRIPTION OF EMBODIMENTS

The following describes technical terms in embodiments of this application.
(1) Multi-path (multi-path) relay may mean that in a relay communication scenario, one remote terminal device (remote user equipment, remote UE) may directly communicate with a network device when indirectly communicating with the network device through one or more relay terminal devices (relay user equipments, relay UEs). Alternatively, one remote UE may simultaneously indirectly communicate with a network device through a plurality of different relay UEs.
   Optionally, in a multi-path relay scenario, a multi-path relay configuration may be involved. For example, the network device may configure one remote UE to perform multi-path relay, for example, configure a remote UE A that is performing single-path relay to perform multi-path relay.
(2) Single-path (single-path) relay may mean that in a relay communication scenario, one remote terminal device (remote user equipment, remote UE) can indirectly communicate with a network device (via an indirect path) through only one relay terminal device (relay user equipment, relay UE); or one remote UE can only directly communicate with a network device (via a direct path).

Optionally, in a single-path relay scenario, path switch (path switch) may be involved. For example, one remote UE currently communicates with the network device through a relay UE. Assuming that signal quality between the remote UE and the relay UE is low, the remote UE may perform path switch. For example, the remote UE may directly communicate with the network device, or may communicate with the network device through another relay UE.

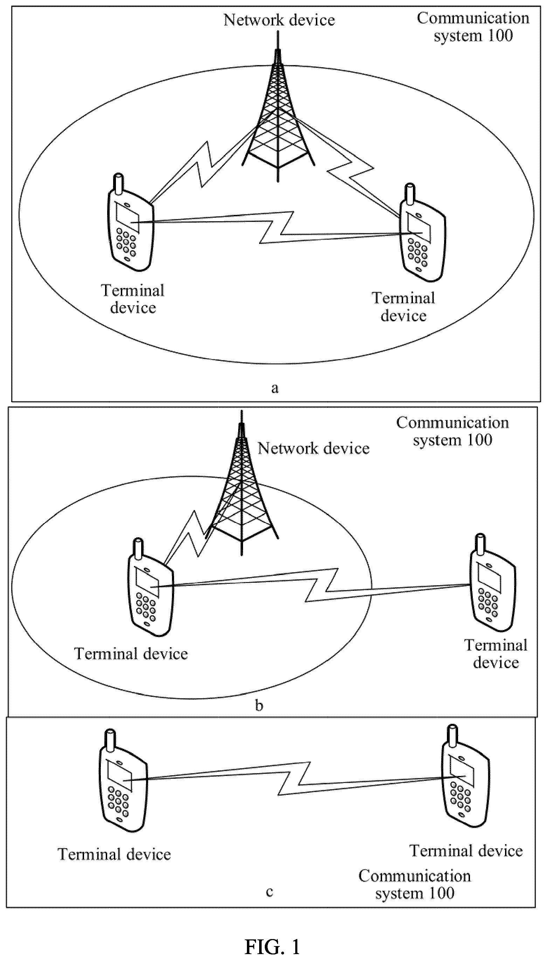

In a wireless communication system, data communication may be performed between terminal devices through a network device. For example, the network device may serve as a relay device, to forward data from a second terminal device to a first terminal device, or forward data from the first terminal device to the second terminal device. Alternatively, communication between terminal devices may be directly performed without using a network device. A communication interface between the terminal devices is referred to as a prose communication 5 (prose communication 5, PC5) interface, and a communication link between the terminal devices may be referred to as an SL. A typical application scenario of SL communication is a vehicle-to-everything (vehicle-to-everything, V2X) technology. FIG. 1 is a diagram of a V2X communication system 100. a in FIG. 1 shows an architecture in coverage of a network device. A PC5 connection is established between terminal devices, and the terminal devices separately establish a connection to the network device. It should be understood that the terminal devices may be connected to a same network device, or may be connected to different network devices. In a in FIG. 1, an example in which the terminal devices are connected to the same network device is used for illustration. b in FIG. 1 shows an architecture in partial coverage of a network device. A PC5 connection is established between terminal devices, a part of the terminal devices does not establish a connection to the network device, and the other remaining part of the terminal devices establishes a connection to the network device. c in FIG. 1 shows an architecture outside coverage of a network device. A PC5 connection is established between terminal devices, and no terminal device establishes a connection to the network device.

The terminal device in this application includes a device that provides a voice and/or data signal connectivity for a user. Specifically, the terminal device includes the device that provides the voice for the user, the device that provides the data signal connectivity for the user, or the device that provides the voice and the data signal connectivity for the user. For example, the terminal device may include a handheld device having a wireless connection function or a processing device connected to a wireless modem. The terminal device may include a user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal) device, an access terminal (access terminal) device, a user terminal (user terminal) device, a user agent (user agent), a user device (user device), a satellite, an uncrewed aerial vehicle, a balloon, an airplane, or the like. For example, the terminal device may include a mobile phone (or referred to as a "cellular" phone), a computer having a mobile terminal device, or a portable, pocket-sized, handheld, or computer-embedded mobile apparatus. For example, the terminal device may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner. By way of example but not limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology. If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

The network device in this application includes, for example, an access network (access network, AN) device, for example, a base station (for example, an access point), and may be a device that is in an access network and that communicates with a wireless terminal device through an air interface in one or more cells. Alternatively, the network device is, for example, a roadside unit (roadside unit, RSU) in a vehicle-to-everything (vehicle-to-everything, V2X) technology. The network device may include an evolved NodeB (NodeB or eNB or e-NodeB, evolved NodeB) in a long term evolution (long term evolution, LTE) system or a long term evolution-advanced (long term evolution-advanced, LTE-A) system, may include a next generation NodeB (next generation NodeB, gNB) in an evolved packet core (evolved packet core, EPC) network, a 5th generation (5th generation, 5G) mobile communication technology, a new radio (new radio, NR) system (also referred to as an NR system for short), or may include a central unit (central unit, CU) and a distributed unit (distributed unit, DU) in a cloud radio access network (cloud radio access network, Cloud RAN) system, a satellite, an uncrewed aerial vehicle, a balloon, an airplane, or the like. This is not limited in embodiments of this application.

It may be understood that in FIG. 1, two terminal devices and one network device are used as an example for description, and the communication system may further include more terminal devices or network devices.

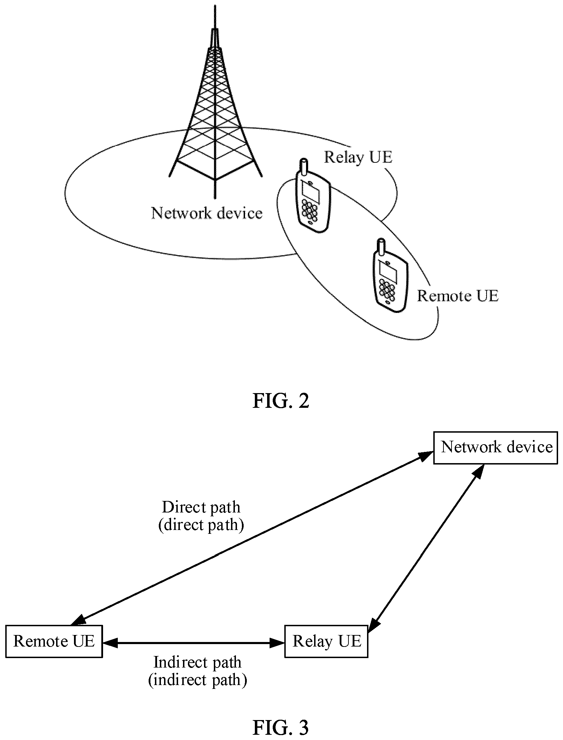

To enhance a network coverage capability, a U2N relay (relay) communication scenario is introduced. Refer to FIG. 2. In a U2N relay scenario, a relay UE communicates with a remote UE over a sidelink. When data transmission is required between the remote UE and a network device, the relay UE may receive uplink data of the remote UE and send the uplink data to the network device, and correspondingly, the remote UE may receive downlink data of the remote UE and send the downlink data to the remote UE.

Before the remote UE establishes a connection to the relay UE, the remote UE and the relay UE may need to perform a discovery (discovery) process to discover each other. Currently, the discovery process may be classified into a mode A and a mode B.

Mode A (mode A): The relay UE broadcasts an announcement (announcement) message, where the message is a prose communication interface 5-signal (prose communication 5-signaling, PC5-S) message. After receiving the message, the remote UE learns of existence of the relay UE. In this case, the remote UE may obtain a source layer 2 identifier (source layer 2 identifier, source L2 ID) of the broadcast announcement message sent by the relay UE. The remote UE may determine, by using the source layer 2 identifier, a destination layer 2 identifier (destination L2 ID) corresponding to a unicast connection establishment request (direct communication request, DCR) message. The remote UE may send the DCR message to the relay UE corresponding to the destination layer 2 identifier, to establish a unicast connection to the relay UE.

Mode B (mode B): The remote UE broadcasts a solicitation (solicitation) message to search for the relay UE. After receiving the message, the relay UE may reply with a response (response) message if a condition permits, so that the remote UE learns of existence of the relay UE. The solicitation message and the response message are both PC5-S messages. In this case, the remote UE may obtain a source layer 2 identifier (source layer 2 identifier, source L2 ID) of the response message sent by the relay UE. The remote UE may determine, by using the source layer 2 identifier, a destination layer 2 identifier (destination L2 ID) corresponding to a unicast connection establishment request (direct communication request, DCR) message. The remote UE may send the DCR message to the relay UE corresponding to the destination layer 2 identifier, to establish a unicast connection to the relay UE.

Currently, U2N relay supports only a single-path relay scenario. Refer to FIG. 3. That a remote UE may be connected to and communicate with a network device via a direct path (direct path) may be referred to as that the remote UE directly communicates with the network device. Alternatively, that a remote UE is connected to and communicates with a network device via an indirect path (indirect path) may be referred to as that the remote UE indirectly communicates with the network device. The indirect path includes a path corresponding to a PC5 interface between the remote UE and a relay UE, and a path corresponding to a Uu interface between the relay UE and the network device.

Because U2N relay supports only single-path relay, if signal quality of a path for a current connection is poor, for example, an RSRP of the path is less than a specific threshold, and/or signal quality of another path is good, for example, an RSRP of the another path is greater than the specific threshold, the remote UE may perform path switch (path switch). Refer to FIG. 3. The remote UE may switch from the direct path to the indirect path, switch from the indirect path to the direct path, or switch from the indirect path to another indirect path. The remote UE may receive a measurement configuration from the network device, perform measurement based on the measurement configuration, and perform measurement reporting. The network device determines a target cell or a target relay UE to which the remote UE is handed over.

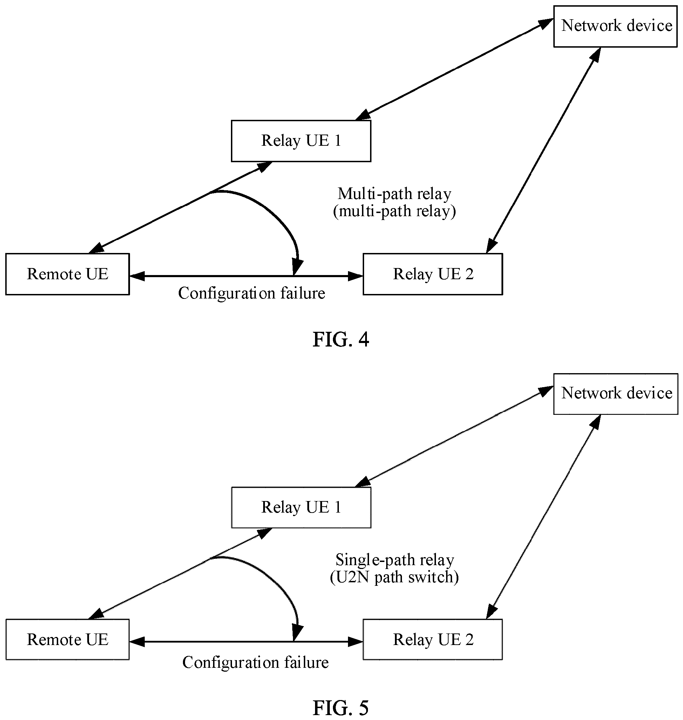

In one aspect, to improve a U2N relay communication rate and U2N relay reliability, multi-path U2N relay may be introduced, to be specific, one remote UE may directly communicate with the network device when indirectly communicating with the network device through one or more relay UEs. For example, when the remote UE has communicated with the network device via the direct path or the indirect path, to improve the communication rate and the reliability between the remote UE and the network device, the remote UE may need to establish a unicast connection to another relay UE under control of the network device, to subsequently communicate with the network device via multiple paths. However, refer to FIG. 4. Not all relay UEs support multi-path relay. For example, a relay UE 2 may not support multi-path relay due to a capability. If a network device does not know that the relay UE 2 does not support multi-path relay and expects the relay UE 2 to perform multi-path relay, a multi-path relay configuration failure may occur. Consequently, a remote UE cannot finally implement multi-path relay through the relay UE 2, and communication quality is affected.

In another aspect, a path switch scenario is considered, and the remote UE may establish a unicast connection to another relay UE under control of the network device, to perform path switch. Refer to FIG. 5. Not all relay UEs support single-path relay, in other words, do not support path switch. For example, a relay UE 2 may not support single-path relay due to a capability. If a network device does not know that the relay UE 2 does not support single-path relay and expects the relay UE 2 to perform single-path relay, a path switch configuration failure may occur. Consequently, a remote UE cannot finally implement single-path relay through the relay UE 2, and communication quality is affected.

In view of this, embodiments of this application provide an information transmission method. In the method, a network device may learn that a relay UE supports single-path relay, supports multi-path relay, or supports single-path relay and multi-path relay, so that a proper configuration can be performed.

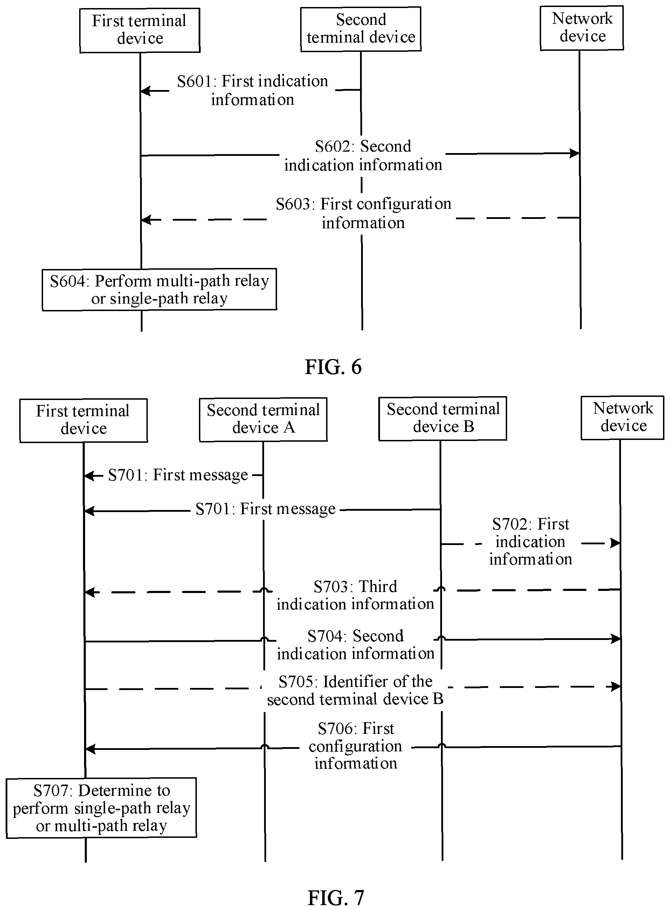

FIG. 6 is an example flowchart of an information transmission method according to an embodiment of this application. The method may include the following operations.

S601: A second terminal device sends first indication information to a first terminal device.

Correspondingly, the first terminal device receives the first indication information from the second terminal device. Optionally, the first terminal device may receive first indication information of a plurality of second terminal devices.

It may be understood that the first terminal device may be the remote terminal device shown in FIG. 2, and the second terminal device may be the relay terminal device shown in FIG. 2. Optionally, the first terminal device may be in a radio resource control (radio resource control, RRC) idle state, an RRC inactive state, or an RRC connected state. Optionally, the second terminal device may be in the RRC idle state, the RRC inactive state, or the RRC connected state.

In a possible implementation, the first indication information may indicate capability information of the second terminal device. The capability information of the second terminal device may include information indicating that the second terminal device supports multi-path relay and/or information indicating that the second terminal device supports single-path relay.

In an example, the capability information of the second terminal device may include the information indicating that the second terminal device supports multi-path relay. For example, the second terminal device supports multi-path relay, or the second terminal device does not support multi-path relay. In another example, the capability information of the second terminal device may include the information indicating that the second terminal device supports single-path relay. For example, the second terminal device supports single-path relay, or the second terminal device does not support single-path relay. In still another example, the capability information of the second terminal device may include the information indicating that the second terminal device supports single-path relay and the information indicating that the second terminal device supports multi-path relay. For example, the second terminal device supports single-path relay but does not support multi-path relay, the second terminal device does not support single-path relay but supports multi-path relay, or the second terminal device supports single-path relay and multi-path relay.

Optionally, that the second terminal device supports single-path relay but does not support multi-path relay may also be referred to as that the second terminal device supports only single-path relay, and that the second terminal device does not support single-path relay but supports multi-path relay may also be referred to as that the second terminal device supports only multi-path relay.

Optionally, that the second terminal device supports single-path relay includes at least one of the following: The second terminal device supports forwarding a paging message to the first terminal device, the second terminal device supports forwarding system information to the first terminal device, and the second terminal device supports the first terminal device in performing path switch between a direct path and an indirect path. It may be understood that the paging message or the system information may be from a network device.

Optionally, that the second terminal device supports multi-path relay includes at least one of the following: The second terminal device supports the first terminal device in adding one or more direct paths based on a current path, the second terminal device supports the first terminal device in adding one or more indirect paths based on the current path, the second terminal device supports the first terminal device in deleting/releasing one or more direct paths based on the current path, the second terminal device supports the first terminal device in deleting/releasing one or more indirect paths based on the current path, the second terminal device in the RRC idle state or the RRC inactive state supports triggering, based on a PC5 RRC message, a PC5-S message, a sidelink relay adaptation protocol (sidelink relay adaption protocol, SRAP) control (control) protocol data unit (protocol data unit, PDU), or a discovery message, to enter the RRC connected state, and the second terminal device in the RRC idle state or the RRC inactive state supports triggering, based only on an RRC connection establishment complete message, to enter the RRC connected state.

In a possible case, a subfeature that the second terminal device in the RRC idle state or the RRC inactive state supports triggering to enter the RRC connected state may include at least one of the following:

In R17, when providing a network connection service for the first terminal device in the RRC connected state, the second terminal device in the RRC idle state or the RRC inactive state needs to enter the RRC connected state, and the second terminal device triggers, by using an RRC reconfiguration complete (RRCReconfigurationComplete) message sent by the first terminal device on SL-RLC1, to enter the connected state.

In R18 or R18+, the second terminal device in the RRC idle state or the RRC inactive state may trigger, by using another message, for example, the PC5 RRC message, the PCS-S message, a sidelink relay adaptation protocol (SRAP control PDU), or the discovery message, to enter the RRC connected state. The another message can help the second terminal device in the RRC idle state or the RRC inactive state determine that the first terminal device currently needs to perform multi-path relay through the second terminal device, and the second terminal device needs to enter the RRC connected state. For example, in this case, a possible case is that the first terminal device cannot send, to the second terminal device, the RRC reconfiguration complete message sent on the SL-RLC1. Therefore, the second terminal device may also be classified into a plurality of types. For example, a first type of the second terminal is a second terminal device that supports triggering, by using the RRC reconfiguration complete (RRCReconfigurationComplete) message sent on the SL-RLC1, to enter the RRC connected state, a second type of the second terminal device is a second terminal device that supports triggering, by using the another message, to enter the RRC connected state, and a third type of the second terminal device is a second terminal device that supports triggering, by using the RRC reconfiguration complete (RRCReconfigurationComplete) message sent on the SL-RLC1, to enter the RRC connected state, and supports triggering, by using the another message, to enter the RRC connected state. It may be understood that the another message herein may include the PC5 RRC message, the PCS-S message, the sidelink relay adaptation protocol (SRAP control PDU), or the discovery message.

Optionally, that the second terminal device supports multi-path relay may also be referred to as that the second terminal device is an R18 UE or an R18+ UE. Optionally, that the second terminal device supports single-path relay may also be referred to as that the second terminal device supports path switch (path switch), or the second terminal device is a non-R18 UE or a non-R18+ UE. For example, the second terminal device is an R17 UE.

It should be noted that the first indication information may be explicit indication information or implicit indication information. The following separately describes the first indication information by using Case 1 and Case 2.

Case 1: The first indication information is the explicit indication information.

In an example, the second terminal device may send a first message to the first terminal device. For example, the second terminal device may broadcast the first message. Correspondingly, the first terminal device may receive the first message from the second terminal device. The first message may be used to discover the second terminal device, and is, for example, an announcement (announcement) message. The first message may include the first indication information, or a container (for example, an RRC container) carried in the first message may include the first indication information.

In another example, the first terminal device may send a second message to the second terminal device. For example, the first terminal device may broadcast the second message. The second message may be used to search for the second terminal device, and is, for example, a solicitation (solicitation) message. The second terminal device may send a first message to the first terminal device. Correspondingly, the first terminal device may receive the first message from the second terminal device. The first message may be used to discover the second terminal device, and is, for example, a response (response) message. The first message may include the first indication information, or a container (for example, an RRC container) carried in the first message may include the first indication information. Optionally, the second message may include or be associated with third indication information. The third indication information may indicate capability information of the first terminal device. The capability information of the first terminal device may include information indicating that the first terminal device supports multi-path relay and/or information indicating that the first terminal device supports single-path relay.

In an example, the capability information of the first terminal device may include the information indicating that the first terminal device supports multi-path relay. For example, the first terminal device supports multi-path relay, or the first terminal device does not support multi-path relay. In another example, the capability information of the first terminal device may include the information indicating that the first terminal device supports single-path relay. For example, the first terminal device supports single-path relay, or the first terminal device does not support single-path relay. In still another example, the capability information of the first terminal device may include the information indicating that the first terminal device supports single-path relay and the information indicating that the first terminal device supports multi-path relay. For example, the first terminal device supports single-path relay but does not support multi-path relay, the first terminal device does not support single-path relay but supports multi-path relay, or the first terminal device supports single-path relay and multi-path relay.

Optionally, that the first terminal device supports single-path relay but does not support multi-path relay may also be referred to as that the first terminal device supports only single-path relay, and that the first terminal device does not support single-path relay but supports multi-path relay may also be referred to as that the first terminal device supports only multi-path relay.

Optionally, that the first terminal device supports single-path relay includes at least one of the following: The first terminal device supports receiving the paging message forwarded by the second terminal device, the first terminal device supports receiving the system information forwarded by the second terminal device, and the first terminal device supports performing path switch between the direct path and the indirect path. It may be understood that the paging message or the system information may be from the network device.

Optionally, that the first terminal device supports multi-path relay includes at least one of the following: The first terminal device supports adding one or more direct paths based on the current path, the first terminal device supports adding one or more indirect paths based on the current path, the first terminal device supports deleting/releasing one or more direct paths based on the current path, the first terminal device supports deleting/releasing one or more indirect paths based on the current path, the first terminal device supports the second terminal device in the RRC idle state or the RRC inactive state in supporting triggering, based on the PC5 RRC message, the PCS-S message, the sidelink relay adaptation protocol (sidelink relay adaption protocol, SRAP) control (control) protocol data unit (protocol data unit, PDU), or the discovery message, to enter the RRC connected state, and the first terminal device supports the second terminal device in the RRC idle state or the RRC inactive state in supporting triggering, based only on the RRC connection establishment complete message, to enter the RRC connected state.

In a possible case, for the subfeature that the second terminal device in the RRC idle state or the RRC inactive state supports triggering to enter the RRC connected state, refer to the foregoing implementations. Details are not described herein again.

In a possible case, a first bit sequence may indicate the information indicating that the second terminal device supports multi-path relay, and a second bit sequence may indicate the information indicating that the second terminal device supports single-path relay. An example in which the first bit sequence and the second bit sequence each are one bit is used below for description.

For example, when a value of the first bit sequence is "0", it may indicate that the second terminal device does not support single-path relay, indicate type information of the second terminal device, where for example, the type information of the second terminal device is the R18 UE/the R18+ UE, or indicate that the second terminal device does not support path switch. When a value of the first bit sequence is "1", it may indicate that the second terminal device supports single-path relay, indicate type information of the second terminal device, where for example, the type information of the second terminal device is the non-R18 UE/the non-R18+ UE, or indicate that the second terminal device supports path switch. The opposite is also possible. For example, when a value of the first bit sequence is "1", it may indicate that the second terminal device does not support single-path relay, indicate type information of the second terminal device, where for example, the type information of the second terminal device is the R18 UE/the R18+ UE, or indicate that the second terminal device does not support path switch. When a value of the first bit sequence is "0", it may indicate that the second terminal device supports single-path relay, indicate type information of the second terminal device, where for example, the type information of the second terminal device is the non-R18 UE/the non-R18+ UE, or indicate that the second terminal device supports path switch.

For another example, when a value of the second bit sequence is "0", it may indicate that the second terminal device does not support multi-path relay, or indicate type information of the second terminal device, where for example, the type information of the second terminal device is the non-R18 UE/the non-R18+ UE. When a value of the second bit sequence is "1", it may indicate that the second terminal device supports multi-path relay, or indicate type information of the second terminal device, where for example, the type information of the second terminal device is the non-R18 UE/the non-R18+ UE. The opposite is also possible. For example, when a value of the second bit sequence is "1", it may indicate that the second terminal device does not support multi-path relay, or indicate type information of the second terminal device, where for example, the type information of the second terminal device is the non-R18 UE/the non-R18+ UE. When a value of the second bit sequence is "0", it may indicate that the second terminal device supports multi-path relay, or indicate type information of the second terminal device, where for example, the type information of the second terminal device is the non-R18 UE/the non-R18+ UE.

It may be understood that the first bit sequence and the second bit sequence may be bit sequences of newly added information in the first message. The newly added information may be dedicated to carrying the first indication information. Alternatively, the first bit sequence and the second bit sequence may be bit sequences of existing information.

It should be noted that the second terminal device may indicate, by using a third bit sequence, the information indicating that the second terminal device supports multi-path relay and/or the information indicating that the second terminal device supports single-path relay. An example in which the third bit sequence is two bits is used for description.

For example, when a value of the third bit sequence is "01", it may indicate that the second terminal device supports multi-path relay. When a value of the third bit sequence is "10", it may indicate that the second terminal device supports single-path relay. When a value of the third bit sequence is "11", it may indicate that the second terminal device supports multi-path relay and single-path relay. Optionally, the third bit sequence may be obtained by combining the first bit sequence and the second bit sequence, and the third bit sequence may be a bit sequence of newly added information in the first message. The newly added information may be dedicated to carrying the first indication information. Alternatively, the third bit sequence may be a bit sequence of existing information.

In a possible implementation, the first indication information is included in the first message. Therefore, the first terminal device may obtain a destination layer 2 identifier of the first message. The destination layer 2 identifier may be a destination layer 2 identifier of the second terminal device that sends the first message. In this case, the first terminal device may determine the first indication information corresponding to the destination layer 2 identifier.

In another possible implementation, the first message includes a source layer 2 identifier, and the source layer 2 identifier may be a source layer 2 identifier for sending the first message. Therefore, the first terminal device may also obtain the first indication information corresponding to the source layer 2 identifier.

It may be understood that the source layer 2 identifier and the destination layer 2 identifier may be in one-to-one correspondence.

It should be noted that the first indication information is merely used as an example for description. A specific form of the first indication information is not limited in this embodiment of this application, and the first indication information may indicate the capability information of the second terminal device.

Case 2: The first indication information is the implicit indication information.

For example, a first message may be associated with the first indication information. The first indication information includes an identifier of the second terminal device, and the identifier of the second terminal device indicates the capability information of the second terminal device.

For example, a destination layer 2 identifier of the second terminal device may indicate the capability information of the second terminal device. The destination layer 2 identifier may be a destination layer 2 identifier of the second terminal device that sends the first message. In a possible case, a correspondence between the destination layer 2 identifier and the capability information of the second terminal device may be stored by using a predefined table. Optionally, the first terminal device may store the table.

For another example, the first indication information may include a service code (service code) in the first message, where the service code indicates the capability information of the second terminal device. In a possible case, a correspondence between the service code and the capability information of the second terminal device may be stored by using a predefined table. Optionally, the first terminal device may store the table.

The first terminal device may determine the capability information of the second terminal device based on the first indication information. Optionally, the first terminal device may further obtain a source layer 2 identifier corresponding to the destination layer 2 identifier of the first message. The source layer 2 identifier may be a source layer 2 identifier of the second terminal device that sends the first message. In this case, the first terminal device may determine the capability information that is of the second terminal device and that corresponds to the source layer 2 identifier.

In an example, the first indication information may be determined by the second terminal device based on the capability information of the second terminal device. For example, when the second terminal device supports multi-path relay, the first indication information indicates the second terminal device to support multi-path relay. For another example, when the second terminal device supports single-path relay, the first indication information indicates the second terminal device to support single-path relay. For another example, when the second terminal device supports single-path relay and multi-path relay, the first indication information indicates the second terminal device to support single-path relay and multi-path relay.

In another example, the first indication information may be indicated by the network device. For example, the second terminal device may send a sidelink user equipment information (sidelink UE information, SUI) message to the network device. The SUI message may include the identifier of the second terminal device, for example, the source layer 2 identifier of the second terminal device. The network device may send the first indication information to the second terminal device. For example, the network device may send an RRC reconfiguration message to the second terminal device, where the RRC reconfiguration message may include the first indication information. Optionally, the first indication information is associated with the identifier of the second terminal device.

In still another example, the first indication information may be determined based on at least one of a quantity of unicast connections and a channel busy ratio (channel busy ratio, CBR). For example, when the quantity of unicast connections of the second terminal device is greater than or equal to a first threshold, and/or when the CBR of the second terminal device is greater than or equal to a second threshold, the first indication information may be used to determine that only single-path relay is supported. For another example, when the quantity of unicast connections of the second terminal device is less than or equal to a first threshold, and/or when the CBR of the second terminal device is less than or equal to a second threshold, the first indication information may be used to determine that only multi-path relay is supported, or multi-path relay and single-path relay are supported. The first threshold and the second threshold may be indicated by the network device, may be preconfigured, or may be predefined.

In a possible case, the second terminal device may send connection state information to the first terminal device. Correspondingly, the first terminal device may receive the connection state information from the second terminal device. The connection state information may include one of the RRC connected state, the RRC inactive state, and the RRC idle state. For example, the first message may include the connection state information.

S602: The first terminal device sends second indication information to the network device.

Correspondingly, the network device receives the second indication information from the first terminal device. Optionally, the first terminal device may send second indication information of a plurality of second terminal devices to the network device.

For example, the first terminal device may send a measurement report message to the network device. The measurement report message may carry the second indication information. Optionally, the measurement report message may further carry signal quality of a path between the first terminal device and the second terminal device corresponding to the second indication information, for example, an RSRP, RSRQ, or an SINR. Optionally, the signal quality may be used by the network device to determine signal quality between the first terminal device and the second terminal device, so that the network device determines whether the first terminal device needs to perform path switch, multi-path relay, or the like.

In a possible implementation, the second indication information may indicate the capability information of the second terminal device.

In a possible case, the second indication information is explicit indication information. The second indication information may be implemented with reference to Case 1. For example, the first bit sequence may indicate the information indicating that the second terminal device supports multi-path relay, and the second bit sequence may indicate the information indicating that the second terminal device supports single-path relay. For another example, the third bit sequence may indicate the information indicating that the second terminal device supports multi-path relay and/or the information indicating that the second terminal device supports single-path relay.

Optionally, the first terminal device may further send the identifier of the second terminal device to the network device. For example, the first terminal device may send the source layer 2 identifier of the second terminal device, for example, the source layer 2 identifier of the first message, to the network device. The source layer 2 identifier and the second indication information are in one-to-one correspondence. Optionally, the first terminal device may send identifiers of the plurality of second terminal devices and second indication information corresponding to an identifier of each second terminal device to the network device.

In another possible case, the second indication information is implicit indication information. In an example, the second indication information may include the identifier of the second terminal device, and an information element that carries the identifier of the second terminal device indicates the capability information of the second terminal device. For example, information elements that carry the identifier of the second terminal device may respectively support single-path relay, support multi-path relay, and support single-path relay and multi-path relay. When the information element that carries the identifier of the second terminal device supports single-path relay, it may be considered that the identifier of the second terminal device indicates that the second terminal device supports single-path relay. When the information element that carries the identifier of the second terminal device supports multi-path relay, it may be considered that the identifier of the second terminal device indicates that the second terminal device supports multi-path relay. When the information element that carries the identifier of the second terminal device supports single-path relay and multi-path relay, it may be considered that the identifier of the second terminal device indicates that the second terminal device supports single-path relay and multi-path relay.

Based on the foregoing solution, the first terminal device may report the capability information of the second terminal device to the network device by using the identifier of the second terminal device, so that the network device configures, by using the identifier of the second terminal device, the second terminal device to perform single-path relay or multi-path relay. This avoids a case in which the first terminal device fails to perform multi-path relay or path switch, and improves U2N relay communication quality.

Optionally, the identifier of the second terminal device may be the source layer 2 identifier, for example, the source layer 2 identifier of the first message. In a possible case, the first terminal device may determine the capability information of the second terminal device based on the implicit first indication information or the explicit first indication information. The first terminal device may carry the source layer 2 identifier of the second terminal device by using different information elements, to indicate the capability information of the second terminal device to the network device. Optionally, capability information of different second terminal devices may correspond to different source layer 2 identifiers. In a possible case, the first terminal device may send the identifiers of the plurality of second terminal devices to the network device, and the identifier of each second terminal device may indicate capability information of the corresponding second terminal device.

It should be noted that the second indication information may be determined based on the first indication information. For example, when the first indication information indicates the second terminal device to support multi-path relay, the second indication information may indicate the second terminal device to support multi-path relay. For another example, when the first indication information indicates the second terminal device to support single-path relay, the second indication information may indicate the second terminal device to support single-path relay. For another example, when the first indication information indicates the second terminal device to support single-path relay and multi-path relay, the second indication information may indicate the second terminal device to support single-path relay and multi-path relay.

In a possible case, the first terminal device may receive the connection state information from the second terminal device. The connection state information may include one of the RRC connected state, the RRC inactive state, and the RRC idle state. For example, the first message may include the connection state information.

In an example, when the second terminal device is in the RRC inactive state or the RRC idle state, the first terminal device may send the second indication information to the network device, that is, perform S602.

In another example, when the second terminal device is in the RRC connected state, the first terminal device may not send the second indication information to the network device, that is, may not perform S602. Optionally, when the second terminal device is in the RRC connected state, the first terminal device may send the identifier of the second terminal device, for example, the source layer 2 identifier, to the network device. Because the second terminal device is in the RRC connected state, the second terminal device may send the first indication information to the network device. In this case, the network device may determine, based on the first indication information reported by the second terminal device and the identifier that is of the second terminal device and that is reported by the first terminal device, the capability information that is of the second terminal device and that corresponds to the identifier of the second terminal device.

Based on the foregoing solution, the first terminal device may report the identifier of the second terminal device to the network device, and the network device may determine the capability information corresponding to the second terminal device based on the identifier of the second terminal device, to configure, by using the identifier of the second terminal device, the second terminal device to perform single-path relay or multi-path relay. This avoids a case in which the first terminal device fails to perform multi-path relay or path switch, and improves U2N relay communication quality.

In a possible implementation, the first terminal device may receive the third indication information from the network device. The third indication information may indicate capability information of the network device. The capability information of the network device may include information indicating that the network device supports multi-path relay and/or information indicating that the network device supports single-path relay. It may be understood that the capability information of the network device may be implemented with reference to the capability information of the second terminal device. Optionally, when the third indication information indicates that the network device supports multi-path relay or indicates that the network device supports multi-path relay and single-path relay, the first terminal device may send the second indication information to the network device. In other words, when the third indication information indicates that the network device supports multi-path relay or indicates that the network device supports multi-path relay and single-path relay, S602 is performed.

It should be understood that the first terminal device may send the second indication information to the network device via the direct path. Alternatively, the first terminal device may send the second indication information to the network device via the indirect path.

Based on the foregoing solution, the first terminal device may determine the capability information of the network device based on the third indication information, so that when the network device supports multi-path relay, the first terminal device sends the second indication information to the network device, to save transmission resources.

Optionally, the first terminal device may further send request information to the network device, where the request information is used to request to perform multi-path relay. It may be understood that the request information and the second indication information in S602 may be transmitted in a same message, or may be transmitted in different messages.

Optionally, the embodiment shown in FIG. 6 may further include the following operation S603.

S603: The network device sends first configuration information to the first terminal device.

Correspondingly, the first terminal device receives the first configuration information from the network device.

For example, the network device may send an RRC reconfiguration message to the first terminal device. The RRC reconfiguration message may include the first configuration information.

In an example, the first configuration information may indicate the first terminal device to perform multi-path relay or single-path relay. For example, the first configuration information indicates the first terminal device to perform multi-path relay through the second terminal device. For another example, the first configuration information indicates the first terminal device to perform single-path relay through the second terminal device, or the first configuration information may indicate to perform path switch, to switch to the second terminal device.

In a possible case, the first configuration information may include fourth indication information and the identifier of the second terminal device. The fourth indication information may indicate the first terminal device to perform multi-path relay or single-path relay. An example in which fifth indication information is one bit is used. When a value of the fifth indication information is "0", it may indicate that the first terminal device performs single-path relay through the second terminal device. When a value of the fifth indication information is "1", it may indicate that the first terminal device performs multi-path relay through the second terminal device.

In another possible case, when the first configuration information is indicated by using a path switch command (path switch command) message, the first configuration information may indicate the first terminal device to perform single-path relay. For another example, when the first configuration information is not indicated by using a path switch command, the first configuration information may indicate the first terminal device to perform multi-path relay. The first configuration information may include the identifier of the second terminal device.

In still another possible case, the first configuration information may include the identifier of the second terminal device. The identifier of the second terminal device may indicate the first terminal device to perform multi-path relay or single-path relay. For example, the identifier of the second terminal device may be the source layer 2 identifier. The first terminal device may perform single-path relay or multi-path relay through the second terminal device corresponding to the source layer 2 identifier. For example, when the capability information that is of the second terminal device and that corresponds to the source layer 2 identifier indicates that the second terminal device supports multi-path relay, the first terminal device may perform multi-path relay through the second terminal device. For another example, when the capability information that is of the second terminal device and that corresponds to the source layer 2 identifier indicates that the second terminal device supports single-path relay, the first terminal device may perform single-path relay or path switch through the second terminal device.

Based on the foregoing solution, because the network device may learn of the capability information of the second terminal device, the network device may send correct first configuration information to the first terminal device. This avoids a case in which the first terminal device fails to perform multi-path relay or path switch, and improves U2N relay communication quality.

Optionally, the embodiment shown in FIG. 6 may further include the following operation S604.

S604: The first terminal device performs multi-path relay or single-path relay.

In an example, when the first configuration information in S603 indicates the first terminal device to perform single-path relay, the first terminal device may perform single-path relay or path switch.

In another example, when the first configuration information in S603 indicates the first terminal device to perform multi-path relay, the first terminal device may continue to perform multi-path relay.

Based on the foregoing solution, the first terminal device may determine, based on the first configuration information of the network device, to perform single-path relay or multi-path relay, so that U2N relay communication quality can be improved.

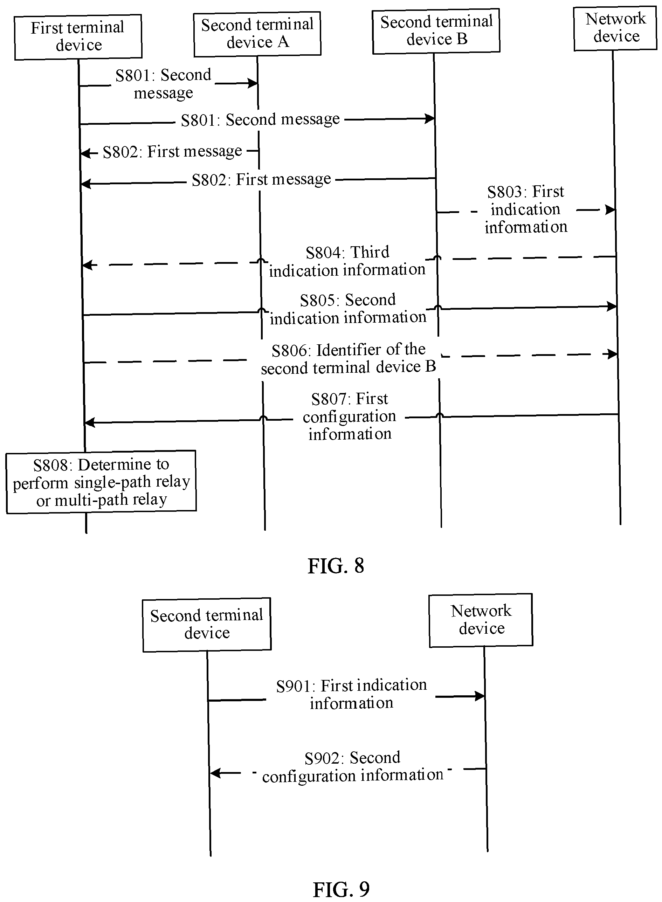

The following describes, separately by using FIG. 7 and FIG. 8, an information transmission method provided in embodiments of this application.

FIG. 7 is an example flowchart of an information transmission method according to an embodiment of this application. The method may include the following operations.

S701: A second terminal device A sends a first message to a first terminal device.

Correspondingly, the first terminal device receives the first message from the second terminal device A.

Optionally, the first message may be an announcement (announcement) message. S701 may be a possible implementation of S601.

The first message of the second terminal device A may carry first indication information. The first indication information may indicate capability information of the second terminal device A. The capability information of the second terminal device A may be implemented with reference to capability information of a second terminal device.

That a second terminal device B sends a first message to the first terminal device may be implemented with reference to that the second terminal device A sends the first message to the first terminal device.

The first indication information may be explicit indication information. Alternatively, the first indication information may be implicit indication information. The first indication information may be implemented with reference to Case 1 or Case 2 in the embodiment shown in FIG. 6.

In a possible case, the first message of the second terminal device A may further include connection state information of the second terminal device A, and the first message of the second terminal device B may further include connection state information of the second terminal device B. It is assumed that the second terminal device A is in an RRC idle state, and the second terminal device B is in an RRC connected state.

Optionally, when the second terminal device B is in the RRC connected state, the embodiment shown in FIG. 7 may further include the following operation S702.

S702: The second terminal device B sends the first indication information to a network device.

Correspondingly, the network device receives the first indication information from the second terminal device B.

The first indication information may indicate capability information of the second terminal device B.

Optionally, the embodiment shown in FIG. 7 may further include the following operation S703.

S703: The network device sends third indication information to the first terminal device.

Correspondingly, the first terminal device may receive the third indication information from the network device. The third indication information may indicate capability information of the network device. The capability information of the network device may be implemented with reference to the capability information of the second terminal device.

It should be noted that S703 is not limited to being performed after S702, and S703 may also be implemented before S702 or before S701.

Optionally, when the third indication information indicates that the network device supports multi-path relay or indicates that the network device supports multi-path relay and single-path relay, the first terminal device may send second indication information to the network device. In other words, when the third indication information indicates that the network device supports multi-path relay or indicates that the network device supports multi-path relay and single-path relay, S704 is performed.

S704: The first terminal device sends the second indication information to the network device.

Correspondingly, the network device receives the second indication information from the first terminal device.

S704 may be implemented with reference to S602. The second indication information may indicate the capability information of the second terminal device A. For example, the second indication information may be explicit indication information, or the second indication information may be implicit indication information. The second indication information may be implemented with reference to the second indication information in the embodiment shown in FIG. 6.

Optionally, when the second terminal device B is in the RRC connected state, the embodiment shown in FIG. 7 may further include the following operation S705.

S705: The first terminal device sends an identifier of the second terminal device B to the network device.

Correspondingly, the network device receives the identifier of the second terminal device B from the first terminal device.

For example, the identifier of the second terminal device B may be a source layer 2 identifier of the first message of the second terminal device B in S701.

It may be understood that the second indication information in S704 and the identifier of the second terminal device B in S705 may be transmitted by using a same message, or may be transmitted by using different messages. This is not specifically limited in this application.

S706: The network device sends first configuration information to the first terminal device.

Correspondingly, the first terminal device receives the first configuration information from the network device.

S706 may be implemented with reference to S603.

For example, the network device may send an RRC reconfiguration message to the first terminal device. The RRC reconfiguration message may carry the first configuration information.

It may be understood that the first configuration information may indicate the first terminal device to perform single-path relay or multi-path relay. The first configuration information may be implemented with reference to the first configuration information in the embodiment shown in FIG. 6. The first configuration information may include an identifier of the second terminal device A.

Optionally, the embodiment shown in FIG. 7 may further include the following operation S707.

S707: The first terminal device determines to perform single-path relay or multi-path relay.

In an example, when the first configuration information in S706 indicates the first terminal device to perform single-path relay, the first terminal device may perform single-path relay through the second terminal device A. In another example, when the first configuration information in S706 indicates the first terminal device to perform multi-path relay, the first terminal device may perform multi-path relay through the second terminal device A. S707 may be implemented with reference to S604.

Based on the foregoing solution, the first message includes or is associated with the first indication information, and the first terminal device may generate the second indication information based on the first indication information and report the second indication information to the network device, so that the network device can learn of the capability information of the second terminal device, and the network device can deliver a correct RRC reconfiguration message. This avoids a case in which the first terminal device fails to perform single-path relay or multi-path relay, and improves U2N relay communication quality.

FIG. 8 is an example flowchart of an information transmission method according to an embodiment of this application. The method may include the following operations.

S801: A first terminal device sends a second message to a second terminal device A.

Correspondingly, the second terminal device A receives the second message from the first terminal device.

The second message may be used to search for the second terminal device A, and is, for example, a solicitation (solicitation) message. Optionally, the second message may include or be associated with third indication information. The third indication information may indicate capability information of the first terminal device. The capability information of the first terminal device may be implemented with reference to capability information of a second terminal device.

That the first terminal device sends a second message to a second terminal device B may be implemented with reference to that the first terminal device sends the second message to the second terminal device A.

S802: The second terminal device A sends a first message to the first terminal device.

Correspondingly, the first terminal device may receive the first message from the second terminal device A.

The first message of the second terminal device A may be used to discover the second terminal device A, and is, for example, a response (response) message. The first message of the second terminal device A may include first indication information or be associated with the first indication information. The first message of the second terminal device A may carry the first indication information. The first indication information of the second terminal device A may indicate capability information of the second terminal device A.

That the second terminal device B sends a first message to the first terminal device may be implemented with reference to that the second terminal device B sends the first message to the first terminal device. The first message of the second terminal device B may carry the first indication information. The first indication information of the second terminal device B may indicate capability information of the second terminal device B.

S802 may be a possible implementation of S601. For example, the first indication information may be explicit indication information or implicit indication information.

In a possible case, the first message of the second terminal device A may further include connection state information of the second terminal device A, and the first message of the second terminal device B may further include connection state information of the second terminal device B. It is assumed that the second terminal device A is in an RRC idle state, and the second terminal device B is in an RRC connected state.

Optionally, when the second terminal device B is in the RRC connected state, the embodiment shown in FIG. 8 may further include the following operation S803.

S803: The second terminal device B sends the first indication information to a network device.

Correspondingly, the network device receives the first indication information from the second terminal device B.

The first indication information may indicate the capability information of the second terminal device B.

Optionally, the embodiment shown in FIG. 8 may further include the following operation S804.

S804: The network device sends third indication information to the first terminal device.

Correspondingly, the first terminal device may receive the third indication information from the network device. The third indication information may indicate capability information of the network device. The capability information of the network device may be implemented with reference to the capability information of the second terminal device.

It should be noted that S804 is not limited to being performed after S803, and S804 may also be implemented before S803 or before S802 or S801.

Optionally, when the third indication information indicates that the network device supports multi-path relay or indicates that the network device supports multi-path relay and single-path relay, the first terminal device may send second indication information to the network device. In other words, when the third indication information indicates that the network device supports multi-path relay or indicates that the network device supports multi-path relay and single-path relay, S805 is performed.

S805: The first terminal device sends the second indication information to the network device.

Correspondingly, the network device receives the second indication information from the first terminal device.

S805 may be implemented with reference to S602. The second indication information may indicate the capability information of the second terminal device A. For example, the second indication information may be explicit indication information, or the second indication information may be implicit indication information. The second indication information may be implemented with reference to the second indication information in the embodiment shown in FIG. 6.

Optionally, when the second terminal device B is in the RRC connected state, the embodiment shown in FIG. 8 may further include the following operation S806.

S806: The first terminal device sends an identifier of the second terminal device B to the network device.

Correspondingly, the network device receives the identifier of the second terminal device B from the first terminal device.

For example, the identifier of the second terminal device B may be a source layer 2 identifier of the first message of the second terminal device B in S802.

It may be understood that the second indication information in S805 and the identifier of the second terminal device B in S806 may be transmitted by using a same message, or may be transmitted by using different messages. This is not specifically limited in this application.

S807: The network device sends first configuration information to the first terminal device.

Correspondingly, the first terminal device receives the first configuration information from the network device.

S807 may be implemented with reference to S603.

For example, the network device may send an RRC reconfiguration message to the first terminal device. The RRC reconfiguration message may carry the first configuration information.

It may be understood that the first configuration information may indicate the first terminal device to perform single-path relay or multi-path relay. The first configuration information may be implemented with reference to the first configuration information in the embodiment shown in FIG. 6. The first configuration information may include an identifier of the second terminal device A.

Optionally, the embodiment shown in FIG. 8 may further include the following operation S808.

S808: The first terminal device determines to perform single-path relay or multi-path relay.

In an example, when the first configuration information in S807 indicates the first terminal device to perform single-path relay, the first terminal device may perform single-path relay through the second terminal device A. In another example, when the first configuration information in S807 indicates the first terminal device to perform multi-path relay, the first terminal device may perform multi-path relay through the second terminal device A. S808 may be implemented with reference to S604.

Based on the foregoing solution, the first message includes or is associated with the first indication information, and the first terminal device may generate the second indication information based on the first indication information and report the second indication information to the network device, so that the network device can learn that either or both of single-path relay and multi-path relay are supported by a target second terminal device, and the network device can deliver a correct RRC reconfiguration message. This avoids a case in which the first terminal device fails to perform single-path relay or multi-path relay, and improves U2N relay communication quality.

In the embodiments shown in FIG. 6 to FIG. 8, the first terminal device reports the capability information of the second terminal device to the network device. In an example, the second terminal device may report the capability information of the second terminal device to the network device. FIG. 9 is an example flowchart of an information transmission method according to an embodiment of this application. The method may include the following operations. In an implementation shown in FIG. 9, a second terminal device may be a remote UE, or the second terminal device may be a relay UE.

S901: The second terminal device sends first indication information to a network device.

Correspondingly, the network device receives the first indication information from the second terminal device. Optionally, the network device may receive first indication information from a plurality of second terminal devices.

The first indication information may indicate capability information of the second terminal device. It may be understood that the first indication information may be implemented with reference to the first indication information or the second indication information shown in FIG. 6. In a possible case, the first indication information is explicit indication information. The first indication information may be implemented with reference to Case 1. For example, a first bit sequence may indicate information indicating that the second terminal device supports multi-path relay, and a second bit sequence may indicate information indicating that the second terminal device supports single-path relay. For another example, a third bit sequence may indicate information indicating that the second terminal device supports multi-path relay and/or information indicating that the second terminal device supports single-path relay. In another possible case, the first indication information is implicit indication information. In an example, the first indication information may include an identifier of the second terminal device, and an information element that carries the identifier of the second terminal device indicates the capability information of the second terminal device. Details are not described herein again.

In a possible case, the second terminal device may send a capability information reporting message to the network device. The capability information reporting message may include the first indication information.

In another possible case, the second terminal device may send SUI to the network device. The SUI may include the first indication information.

In a possible implementation, the first terminal device may receive third indication information from the network device. The third indication information may indicate capability information of the network device. The capability information of the network device may include information indicating that the network device supports multi-path relay and/or information indicating that the network device supports single-path relay. It may be understood that the capability information of the network device may be implemented with reference to the capability information of the second terminal device. Optionally, when the third indication information indicates that the network device supports multi-path relay or indicates that the network device supports multi-path relay and single-path relay, the first terminal device may send the second indication information to the network device. In other words, when the third indication information indicates that the network device supports multi-path relay or indicates that the network device supports multi-path relay and single-path relay, S901 is performed.

It should be understood that the second terminal device may send the second indication information to the network device via a direct path. Alternatively, the second terminal device may send the second indication information to the network device via an indirect path.

S902: The network device sends second configuration information to the second terminal device.

Correspondingly, the second terminal device receives the second configuration information from the network device.

For example, the network device may send an RRC reconfiguration message to the second terminal device. The RRC reconfiguration message may include the second configuration information. It may be understood that the second configuration information may be implemented with reference to first configuration information.

In an example, the second configuration information may indicate the second terminal device to perform multi-path relay or single-path relay. For example, the second configuration information indicates the second terminal device to perform multi-path relay. For another example, the second configuration information indicates the first terminal device to perform single-path relay.

In a possible case, when the second configuration information is indicated by using a path switch command (path switch command) message, the second configuration information may indicate the second terminal device to perform single-path relay. For another example, when the second configuration information is not indicated by using a path switch command, the second configuration information may indicate the second terminal device to perform multi-path relay.

In a possible implementation, the second configuration information may be determined based on the first indication information and an identifier that is of a target second terminal device and that is reported by the first terminal device. For example, the network device may send measurement configuration information to the first terminal device, to indicate the first terminal device to measure signal quality. For example, the network device may indicate the first terminal device to measure signal quality between the first terminal device and each of one or more second terminal devices. The first terminal device may send a measurement report message to the network device. The measurement report message may include an identifier of the one or more second terminal devices.

For example, when determining, based on the first indication information in S901 and the identifier that is of the second terminal device and that is reported by the first terminal device, that the second terminal device supports single-path relay, the network device may send the second configuration information to the second terminal device, to indicate the second terminal device to perform single-path relay. For another example, when determining, based on the first indication information in S901 and the identifier that is of the second terminal device and that is reported by the first terminal device, that the second terminal device supports multi-path relay, the network device may send the second configuration information to the second terminal device, to indicate the second terminal device to perform multi-path relay. For another example, when determining, based on the first indication information in S901 and the identifier that is of the second terminal device and that is reported by the first terminal device, that the second terminal device supports single-path relay and multi-path relay, the network device may send the second configuration information to the second terminal device, to indicate the second terminal device to perform single-path relay or multi-path relay.

Based on the foregoing solution, the second terminal device may report the first indication information to the network device, so that the network device can learn of the capability information of the second terminal device, and the network device can deliver correct configuration information. This avoids a case in which the first terminal device fails to perform multi-path relay or single-path relay, and improves U2N relay communication quality.

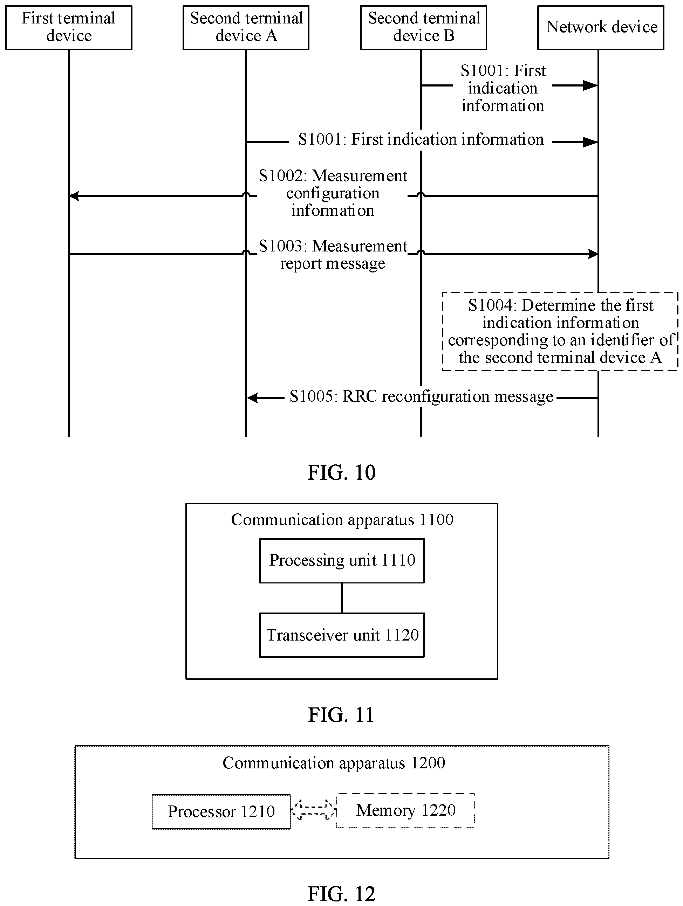

The following describes, by using FIG. 10, an information transmission method provided in embodiments of this application. The method may include the following operations.

S1001: A second terminal device A sends first indication information to a network device.

Correspondingly, the network device receives the first indication information from the second terminal device A, where the first indication information may indicate capability information of the second terminal device A. The capability information of the second terminal device A may be implemented with reference to capability information of a second terminal device.

It may be understood that a second terminal device B may also send the first indication information to the network device, and correspondingly, the network device receives the first indication information from the second terminal device B. The first indication information of the second terminal device B may indicate capability information of the second terminal device B. The capability information of the second terminal device B may be implemented with reference to the capability information of the second terminal device.

S1001 is a possible implementation of S901.

S1002: The network device sends measurement configuration information to a first terminal device.

Correspondingly, the first terminal device receives the measurement configuration information from the network device.

S1003: The first terminal device sends a measurement report message to the network device.

Correspondingly, the network device receives the measurement report message from the first terminal device. Optionally, the measurement report message may include an identifier of the second terminal device, for example, an identifier of the second terminal device A.

Optionally, the embodiment shown in FIG. 10 may further include the following operation S1004.

S1004: The network device determines the first indication information corresponding to the identifier of the second terminal device A.

For example, the network device may determine the identifier that is of the second terminal device and that is included in the measurement report message in S1003, for example, the identifier of the second terminal device A. The network device may determine the capability information of the second terminal device A based on the first indication information reported by the second terminal device A in S1001, to determine whether the second terminal device A performs single-path relay or multi-path relay.

S1005: The network device may send an RRC reconfiguration message to the second terminal device A.

Correspondingly, the second terminal device A may receive the RRC reconfiguration message from the network device.

S1005 may be a possible implementation of S902. The RRC reconfiguration message may include second configuration information. The second configuration information may be implemented with reference to the embodiment shown in FIG. 9. The second configuration information may indicate the second terminal device A to perform single-path relay or multi-path relay.

For example, when determining, based on the first indication information of the second terminal device A, that the second terminal device A supports only single-path relay, the network device may send the second configuration information to the second terminal device A, to indicate the second terminal device A to perform single-path relay. For another example, when determining, based on the first indication information of the second terminal device A, that the second terminal device A supports only multi-path relay, the network device may send the second configuration information to the second terminal device A, to indicate the second terminal device A to perform multi-path relay. For another example, when determining, based on the first indication information of the second terminal device A, that the second terminal device A supports single-path relay and multi-path relay, the network device may send the second configuration information to the second terminal device A, to indicate the second terminal device A to perform single-path relay or multi-path relay.

The following describes, with reference to the accompanying drawings, communication apparatuses, in embodiments of this application, configured to implement the foregoing methods. Therefore, all the foregoing content may be used in the following embodiments. Repeated content is not described again.

FIG. 11 is a block diagram of a communication apparatus 1100 according to an embodiment of this application. The communication apparatus 1100 may correspondingly implement functions or steps implemented by the first terminal device, the second terminal device, or the network device in the foregoing method embodiments. The communication apparatus may include a processing unit 1110 and a transceiver unit 1120. Optionally, a storage unit may be further included. The storage unit may be configured to store instructions (code or a program) and/or data. The processing unit 1110 and the transceiver unit 1120 may be coupled to the storage unit. For example, the processing unit 1110 may read the instructions (the code or the program) and/or the data in the storage unit, to implement a corresponding method. The foregoing units may be independently disposed, or may be partially or completely integrated.

In some possible implementations, the communication apparatus 1100 can correspondingly implement behavior and functions of the first terminal device in the foregoing method embodiments. For example, the communication apparatus 1100 may be a first terminal device, or may be a component (for example, a chip or a circuit) used in the first terminal device. The transceiver unit 1120 may be configured to perform all receiving or sending operations performed by the first terminal device in the embodiments shown in FIG. 6 to FIG. 10, for example, S601 to S603 in the embodiment shown in FIG. 6, and/or configured to support another process of the technology described in this specification. The processing unit 1110 is configured to perform all operations other than the receiving or sending operations performed by the first terminal device in the embodiments shown in FIG. 6 to FIG. 10, for example, S604 in the embodiment shown in FIG. 6, and/or configured to support another process of the technology described in this specification.

For example, the transceiver unit 1120 is configured to receive first indication information from a second terminal device. The first indication information indicates capability information of the second terminal device, and the capability information of the second terminal device includes information indicating that the second terminal device supports multi-path relay and/or information indicating that the second terminal device supports single-path relay. The processing unit 1110 is configured to generate second indication information, where the second indication information indicates the capability information of the second terminal device. The transceiver unit 1120 is further configured to send the second indication information to a network device.

In a possible case, the transceiver unit 1120 is further configured to receive connection state information from the second terminal device. The connection state information may include one of an RRC connected state, an RRC inactive state, and an RRC idle state.

In an example, when the second terminal device is in the RRC inactive state or the RRC idle state, the transceiver unit 1120 may send the second indication information to the network device.

In another example, when the second terminal device is in the RRC connected state, the communication apparatus may not send the second indication information to the network device. Optionally, when the second terminal device is in the RRC connected state, the transceiver unit 1120 is further configured to send an identifier of the second terminal device to the network device.

In a possible implementation, the transceiver unit 1120 is further configured to send the identifier of the second terminal device to the network device. The identifier of the second terminal device is associated with the second indication information.

In a possible implementation, the identifier of the second terminal device includes a source layer 2 identifier of the second terminal device.

In a possible implementation, the transceiver unit 1120 is further configured to send request information to the network device, where the request information is used to request to perform multi-path relay.

In a possible implementation, the transceiver unit 1120 is further configured to receive first configuration information from the network device, where the first configuration information indicates the first terminal device to perform multi-path relay or single-path relay, and the first configuration information includes the identifier of the second terminal device.

In a possible implementation, the processing unit 1110 is further configured to determine the second indication information based on the first indication information. For example, when the first indication information indicates the second terminal device to support multi-path relay, the second indication information may indicate the second terminal device to support multi-path relay. For another example, when the first indication information indicates the second terminal device to support single-path relay, the second indication information may indicate the second terminal device to support single-path relay. For another example, when the first indication information indicates the second terminal device to support single-path relay and multi-path relay, the second indication information may indicate the second terminal device to support single-path relay and multi-path relay.

In a possible implementation, the transceiver unit 1120 is further configured to receive third indication information from the network device, where the third indication information indicates capability information of the network device, and the capability information of the network device includes information indicating that the network device supports multi-path relay and/or information indicating that the network device supports single-path relay.

In a possible implementation, the transceiver unit 1120 is specifically configured to: when the capability information of the network device includes the information indicating that the network device supports multi-path relay, send the second indication information to the network device.

In some possible implementations, the communication apparatus 1100 can correspondingly implement behavior and functions of the second terminal device in the foregoing method embodiments. For example, the communication apparatus 1100 may be a second terminal device, or may be a component (for example, a chip or a circuit) used in the second terminal device. The transceiver unit 1120 may be configured to perform all receiving or sending operations performed by the second terminal device in the embodiments shown in FIG. 6 to FIG. 10, for example, S601 in the embodiment shown in FIG. 6, and/or configured to support another process of the technology described in this specification. The processing unit 1110 is configured to perform all operations other than the receiving or sending operations performed by the second device in the embodiments shown in FIG. 6 to FIG. 10.

For example, the processing unit 1110 is configured to determine first indication information. The first indication information indicates capability information of the second terminal device, and the capability information of the second terminal device includes information indicating that the second terminal device supports multi-path relay and/or information indicating that the second terminal device supports single-path relay. The transceiver unit 1120 is configured to send the first indication information to a first terminal device.

In a possible case, the transceiver unit 1120 is further configured to send connection state information to the first terminal device. The connection state information may include one of an RRC connected state, an RRC inactive state, and an RRC idle state.

For another example, the processing unit 1110 is configured to generate first indication information. The transceiver unit 1120 is configured to send the first indication information to a network device, where the first indication information indicates capability information of the second terminal device, and the capability information of the second terminal device includes information indicating that the second terminal device supports multi-path relay and/or information indicating that the second terminal device supports single-path relay. The transceiver unit 1120 is further configured to receive second configuration information from the network device, where the second configuration information indicates the second terminal device to perform multi-path relay or single-path relay.

In a possible implementation, the transceiver unit 1120 is further configured to send an identifier of the second terminal device to the network device. The identifier of the second terminal device is associated with the first indication information.

In a possible implementation, the transceiver unit 1120 is further configured to receive third indication information from the network device, where the third indication information indicates capability information of the network device, and the capability information of the network device includes information indicating that the network device supports multi-path relay and/or information indicating that the network device supports single-path relay.

In a possible implementation, the transceiver unit 1120 is specifically configured to: when the capability information of the network device includes the information indicating that the network device supports multi-path relay, send the first indication information to the network device.

In some possible implementations, the communication apparatus 1100 can correspondingly implement behavior and functions of the network device in the foregoing method embodiments. For example, the communication apparatus 1100 may be a network device, or may be a component (for example, a chip or a circuit) used in the network device. The transceiver unit 1120 may be configured to perform all receiving or sending operations performed by the network device in the embodiments shown in FIG. 6 to FIG. 10, for example, S602 and S603 in the embodiment shown in FIG. 6, and/or configured to support another process of the technology described in this specification. The processing unit 1110 is configured to perform all operations other than the receiving or sending operations performed by the second device in the embodiments shown in FIG. 6 to FIG. 10, for example, S1004 in the embodiment shown in FIG. 10, and/or configured to support another process of the technology described in this specification.

For example, the transceiver unit 1120 is configured to receive second indication information from a first terminal device, where the second indication information indicates capability information of a second terminal device, and the capability information of the second terminal device includes information indicating that the second terminal device supports multi-path relay and/or information indicating that the second terminal device supports single-path relay. The processing unit 1110 is configured to generate first configuration information, where the first configuration information indicates the first terminal device to perform multi-path relay or single-path relay, and the first configuration information includes an identifier of the second terminal device. The transceiver unit 1120 is further configured to send the first configuration information to the first terminal device.

In a possible implementation, the transceiver unit 1120 is further configured to receive the identifier of the second terminal device. The identifier of the second terminal device is associated with the second indication information.

In a possible implementation, the transceiver unit 1120 is further configured to receive request information from the first terminal device, where the request information is used to request to perform multi-path relay.

In a possible implementation, the transceiver unit 1120 is further configured to send third indication information to the first terminal device, where the third indication information indicates capability information of the network device, and the capability information of the network device includes information indicating that the network device supports multi-path relay and/or information indicating that the network device supports single-path relay.

For another example, the transceiver unit 1120 is configured to receive first indication information from a second terminal device, where the first indication information indicates capability information of the second terminal device, and the capability information of the second terminal device includes information indicating that the second terminal device supports multi-path relay and/or information indicating that the second terminal device supports single-path relay. The processing unit 1110 is configured to generate second configuration information. The transceiver unit 1120 is further configured to send the second configuration information to the second terminal device, where the second configuration information indicates the second terminal device to perform multi-path relay or single-path relay.

In a possible implementation, the transceiver unit 1120 is further configured to receive an identifier of the second terminal device from the second terminal device. The identifier of the second terminal device is associated with the first indication information.

In a possible implementation, the transceiver unit 1120 is further configured to receive a measurement report message from a first terminal device, where the measurement report message includes the identifier of the second terminal device. The second configuration information is determined based on the identifier of the second terminal device and the first indication information.

In a possible implementation, the transceiver unit 1120 is further configured to send third indication information to the second terminal device, where the third indication information indicates the capability information of the network device, and the capability information of the network device includes the information indicating that the network device supports multi-path relay and/or the information indicating that the network device supports single-path relay.

For operations performed by the processing unit 1110 and the transceiver unit 1120, refer to the related descriptions in the foregoing method embodiments.

It should be understood that the processing unit 1110 in this embodiment of this application may be implemented by a processor or a processor-related circuit component, and the transceiver unit 1120 may be implemented by a transceiver, a transceiver-related circuit component, or a communication interface.

Based on a same concept, as shown in FIG. 12, an embodiment of this application provides a communication apparatus 1200. The communication apparatus 1200 includes a processor 1210. Optionally, the communication apparatus 1200 may further include a memory 1220, configured to: store instructions executed by the processor 1210, store input data required by the processor 1210 to run instructions, or store data generated after the processor 1210 runs instructions. The processor 1210 may implement the method shown in the foregoing method embodiments by using the instructions stored in the memory 1220.

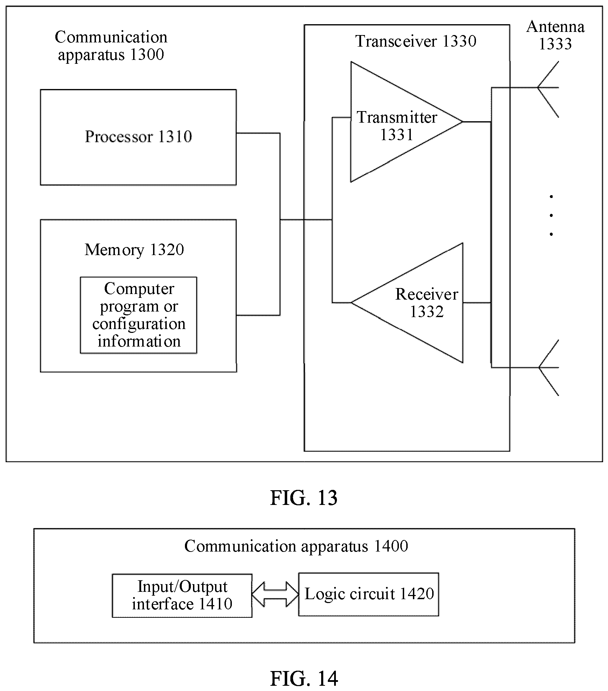

Based on a same concept, as shown in FIG. 13, an embodiment of this application provides a communication apparatus 1300. The communication apparatus 1300 may be a chip or a chip system. Optionally, in this embodiment of this application, the chip system may include a chip, or may include a chip and another discrete component.

The communication apparatus 1300 may include at least one processor 1310. The processor 1310 is coupled to a memory. Optionally, the memory may be located inside the apparatus, or may be located outside the apparatus. For example, the communication apparatus 1300 may further include at least one memory 1320. The memory 1320 stores a necessary computer program, configuration information, a computer program or instructions, and/or data for implementing any one of the foregoing embodiments. The processor 1310 may execute the computer program stored in the memory 1320, to complete the method in any one of the foregoing embodiments.

The coupling in this embodiment of this application may be an indirect coupling or a communication connection between apparatuses, units, or modules in an electrical form, a mechanical form, or another form, and is for information exchange between the apparatuses, the units, or the modules. The processor 1310 and the memory 1320 may operate cooperatively. A specific connection medium between a transceiver 1330, the processor 1310, and the memory 1320 is not limited in this embodiment of this application.

The communication apparatus 1300 may further include the transceiver 1330, and the communication apparatus 1300 may exchange information with another device through the transceiver 1330. The transceiver 1330 may be a circuit, a bus, a transceiver, or any other apparatus that may be configured to exchange information, or is referred to as a signal transceiver unit. As shown in FIG. 13, the transceiver 1330 includes a transmitter 1331, a receiver 1332, and an antenna 1333. In addition, when the communication apparatus 1300 is a chip-type apparatus or a circuit, the transceiver in the communication apparatus 1300 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1300 may be used in a first terminal device. Specifically, the communication apparatus 1300 may be the first terminal device, or may be an apparatus that can support the first terminal device in implementing functions of the first terminal device in any one of the foregoing embodiments. The memory 1320 stores a necessary computer program, a computer program or instructions, and/or data for implementing the functions of the first terminal device in any one of the foregoing embodiments. The processor 1310 may execute the computer program stored in the memory 1320, to complete the method performed by the first terminal device in any one of the foregoing embodiments. Used in the first terminal device, the transmitter 1331 in the communication apparatus 1300 may be configured to send second indication information through the antenna 1333, and the receiver 1332 in the communication apparatus 1300 may be configured to receive first configuration information and/or first indication information through the antenna 1333.

In another possible implementation, the communication apparatus 1300 may be used in a second terminal device. Specifically, the communication apparatus 1300 may be the second terminal device, or may be an apparatus that can support the second terminal device in implementing functions of the second terminal device in any one of the foregoing embodiments. The memory 1320 stores a necessary computer program, a computer program or instructions, and/or data for implementing the functions of the second terminal device in any one of the foregoing embodiments. The processor 1310 may execute the computer program stored in the memory 1320, to complete the method performed by the second terminal device in any one of the foregoing embodiments. Used in the second terminal device, the transmitter 1331 in the communication apparatus 1300 may be configured to send first indication information through the antenna 1333, and the receiver 1332 in the communication apparatus 1300 may be configured to receive second configuration information through the antenna 1333.

In another possible implementation, the communication apparatus 1300 may be used in a network device. Specifically, the communication apparatus 1300 may be the network device, or may be an apparatus that can support the network device in implementing functions of the network device in any one of the foregoing embodiments. The memory 1320 stores a necessary computer program, a computer program or instructions, and/or data for implementing the functions of the network device in any one of the foregoing embodiments. The processor 1310 may execute the computer program stored in the memory 1320, to complete the method performed by the network device in any one of the foregoing embodiments. Used in the network device, the transmitter 1331 in the communication apparatus 1300 may be configured to send first configuration information and/or second configuration information through the antenna 1333, and the receiver 1332 in the communication apparatus 1300 may be configured to receive second indication information and/or first indication information through the antenna 1333.

The communication apparatus 1300 provided in this embodiment may be used in the first terminal device to complete the method performed by the first terminal device, or may be used in the second terminal device to complete the method performed by the second terminal device. Therefore, for technical effects that can be achieved by the communication apparatus 1300, refer to the foregoing method embodiments. Details are not described herein again. Alternatively, the communication apparatus 1300 is used in the network device to complete the method performed by the network device. Therefore, for technical effects that can be achieved by the communication apparatus 1300, refer to the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps in the methods disclosed with reference to embodiments of this application may be directly performed and completed by a hardware processor, or may be performed and completed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store the computer program, the computer program or the instructions, and/or the data.

Based on the foregoing embodiments, refer to FIG. 14. An embodiment of this application further provides another communication apparatus 1400, including an input/output interface 1410 and a logic circuit 1420. The input/output interface 1410 is configured to receive code instructions and transmit the code instructions to the logic circuit 1420. The logic circuit 1420 is configured to run the code instructions to perform the method performed by the first terminal device, the second terminal device, or the network device in any one of the foregoing embodiments.

The following describes in detail an operation performed by the communication apparatus used in a first terminal device, a second terminal device, or a network device.

In an optional implementation, the communication apparatus 1400 may be used in the first terminal device, to perform the method performed by the first terminal device, specifically, for example, the method performed by the first terminal device in the embodiments shown in FIG. 6 to FIG. 10.

For example, the input/output interface 1410 is configured to input first indication information from the second terminal device. The first indication information indicates capability information of the second terminal device, and the capability information of the second terminal device includes information indicating that the second terminal device supports multi-path relay and/or information indicating that the second terminal device supports single-path relay. The logic circuit 1420 is configured to generate second indication information, where the second indication information indicates the capability information of the second terminal device. The input/output interface 1410 is further configured to output the second indication information to the network device.

In another optional implementation, the communication apparatus 1400 may be used in the second terminal device, to perform the method performed by the second terminal device, specifically, for example, the method performed by the second terminal device in the method embodiments shown in FIG. 6 to FIG. 10.

For example, the logic circuit 1420 is configured to determine first indication information. The first indication information indicates capability information of the second terminal device, and the capability information of the second terminal device includes information indicating that the second terminal device supports multi-path relay and/or information indicating that the second terminal device supports single-path relay. The input/output interface 1410 is configured to output the first indication information to the first terminal device.

For another example, the logic circuit 1420 is configured to generate first indication information. The input/output interface 1410 is configured to output the first indication information to the network device, where the first indication information indicates the capability information of the second terminal device, and the capability information of the second terminal device includes the information indicating that the second terminal device supports multi-path relay and/or the information indicating that the second terminal device supports single-path relay. The input/output interface 1410 is further configured to input second configuration information from the network device, where the second configuration information indicates the second terminal device to perform multi-path relay or single-path relay.

In another optional implementation, the communication apparatus 1400 may be used in the network device, to perform the method performed by the network device, specifically, for example, the method performed by the network device in the method embodiments shown in FIG. 6 to FIG. 10.

For example, the input/output interface 1410 is configured to input second indication information from the first terminal device, where the second indication information indicates capability information of the second terminal device, and the capability information of the second terminal device includes information indicating that the second terminal device supports multi-path relay and/or information indicating that the second terminal device supports single-path relay. The logic circuit 1420 is configured to generate first configuration information, where the first configuration information indicates the first terminal device to perform multi-path relay or single-path relay, and the first configuration information includes an identifier of the second terminal device. The input/output interface 1410 is further configured to output the first configuration information to the first terminal device.

For another example, the input/output interface 1410 is configured to input first indication information from the second terminal device, where the first indication information indicates capability information of the second terminal device, and the capability information of the second terminal device includes information indicating that the second terminal device supports multi-path relay and/or information indicating that the second terminal device supports single-path relay. The logic circuit 1420 is configured to generate second configuration information. The input/output interface 1410 is further configured to output the second configuration information to the second terminal device, where the second configuration information indicates the second terminal device to perform multi-path relay or single-path relay.

The communication apparatus 1400 provided in this embodiment may be used in the first terminal device to perform the method performed by the first terminal device, used in the second terminal device to complete the method performed by the second terminal device, or used in the network device to complete the method performed by the network device. Therefore, for technical effects that can be achieved by the communication apparatus 1400, refer to the foregoing method embodiments. Details are not described herein again.

Based on the foregoing embodiments, an embodiment of this application further provides a communication system. The communication system includes at least one communication apparatus used in a first terminal device and at least one communication apparatus used in a second terminal device. Alternatively, the communication system includes at least one communication apparatus used in a first terminal device, at least one communication apparatus used in a second terminal device, and at least one communication apparatus used in a network device. For technical effects that can be achieved by the communication system, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the network device in any one of the foregoing embodiments is implemented. The computer-readable storage medium may include any medium that can store program code, such as a USB flash drive, a removable hard disk drive, a read-only memory, a random access memory, a magnetic disk, or an optical disc.

To implement functions of the communication apparatuses in FIG. 11 to FIG. 14, an embodiment of this application further provides a chip, including a processor, configured to support the communication apparatus in implementing functions of the first terminal device, the second terminal device, or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program or the instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations provided that these modifications and variations of embodiments of this application fall within the scope of the claims of this application and equivalent technologies thereof.

## Claims

1. An information transmission method, comprising:
receiving first indication information from a second terminal device, wherein the first indication information indicates capability information of the second terminal device, and the capability information of the second terminal device comprises information indicating that the second terminal device supports multi-path relay and/or information indicating that the second terminal device supports single-path relay; and
sending second indication information to a network device, wherein the second indication information indicates the capability information of the second terminal device.

2. The method according to claim 1, wherein the sending second indication information to a network device comprises:
sending an identifier of the second terminal device to the network device, wherein the identifier of the second terminal device is associated with the second indication information.

3. The method according to claim 2, wherein the identifier of the second terminal device comprises a source layer 2 identifier of the second terminal device.

4. The method according to any one of claims 1 to 3, further comprising:
sending request information to the network device, wherein the request information is used to request to perform multi-path relay.

5. The method according to any one of claims 1 to 4, further comprising:
receiving first configuration information from the network device, wherein the first configuration information indicates to perform multi-path relay or single-path relay, and the first configuration information comprises the identifier of the second terminal device.

6. The method according to any one of claims 1 to 5, wherein a destination layer 2 identifier of a first message is associated with the first indication information, and the first message is used to discover the second terminal device.

7. The method according to any one of claims 1 to 6, further comprising:
determining the second indication information based on the first indication information.

8. The method according to any one of claims 1 to 7, further comprising:
receiving third indication information from the network device, wherein the third indication information indicates capability information of the network device, and the capability information of the network device comprises information indicating that the network device supports multi-path relay and/or information indicating that the network device supports single-path relay.

9. The method according to claim 8, further comprising:
when the capability information of the network device comprises the information indicating that the network device supports multi-path relay, sending the second indication information to the network device.

10. An information transmission method, comprising:
determining first indication information, wherein the first indication information indicates capability information of a second terminal device, and the capability information of the second terminal device comprises information indicating that the second terminal device supports multi-path relay and/or information indicating that the second terminal device supports single-path relay; and
sending the first indication information to a first terminal device.

11. The method according to claim 10, wherein a destination layer 2 identifier of a first message is associated with the first indication information, and the first message is used to discover the second terminal device.

12. The method according to claim 10 or 11, wherein the first indication information is indicated by a network device.

13. The method according to any one of claims 10 to 12, wherein the first indication information is determined based on at least one of a quantity of unicast connections and a channel busy ratio.

14. An information transmission method, comprising:
receiving second indication information from a first terminal device, wherein the second indication information indicates capability information of a second terminal device, and the capability information of the second terminal device comprises information indicating that the second terminal device supports multi-path relay and/or information indicating that the second terminal device supports single-path relay; and
sending first configuration information to the first terminal device, wherein the first configuration information indicates the first terminal device to perform multi-path relay or single-path relay, and the first configuration information comprises an identifier of the second terminal device.

15. The method according to claim 14, wherein the receiving second indication information from a first terminal device comprises:
receiving the identifier of the second terminal device, wherein the identifier of the second terminal device is associated with the second indication information.

16. The method according to claim 15, wherein the identifier of the second terminal device comprises a source layer 2 identifier of the second terminal device.

17. The method according to any one of claims 14 to 16, further comprising:
receiving request information from the first terminal device, wherein the request information is used to request to perform multi-path relay.

18. The method according to any one of claims 14 to 17, wherein a destination layer 2 identifier of a first message is associated with first indication information, and the first message is used to discover the second terminal device.

19. The method according to any one of claims 14 to 18, further comprising:
sending third indication information to the first terminal device, wherein the third indication information indicates capability information of a network device, and the capability information of the network device comprises information indicating that the network device supports multi-path relay and/or information indicating that the network device supports single-path relay.

20. An information transmission method, comprising:
sending first indication information to a network device, wherein the first indication information indicates capability information of a second terminal device, and the capability information of the second terminal device comprises information indicating that the second terminal device supports multi-path relay and/or information indicating that the second terminal device supports single-path relay; and
receiving second configuration information from the network device, wherein the second configuration information indicates the second terminal device to perform multi-path relay or single-path relay.

21. The method according to claim 20, wherein the sending first indication information to a network device comprises:
sending an identifier of the second terminal device to the network device, wherein the identifier of the second terminal device is associated with the first indication information.

22. The method according to claim 21, wherein the identifier of the second terminal device comprises a source layer 2 identifier of the second terminal device.

23. The method according to any one of claims 20 to 22, further comprising:
receiving third indication information from the network device, wherein the third indication information indicates capability information of the network device, and the capability information of the network device comprises information indicating that the network device supports multi-path relay and/or information indicating that the network device supports single-path relay.

24. The method according to claim 23, further comprising:
when the capability information of the network device comprises the information indicating that the network device supports multi-path relay, sending the first indication information to the network device.

25. An information transmission method, comprising:
receiving first indication information from a second terminal device, wherein the first indication information indicates capability information of the second terminal device, and the capability information of the second terminal device comprises information indicating that the second terminal device supports multi-path relay and/or information indicating that the second terminal device supports single-path relay; and
sending second configuration information to the second terminal device, wherein the second configuration information indicates the second terminal device to perform multi-path relay or single-path relay.

26. The method according to claim 25, wherein the receiving first indication information from a second terminal device comprises:
receiving an identifier of the second terminal device from the second terminal device, wherein the identifier of the second terminal device is associated with the first indication information.

27. The method according to claim 26, wherein the identifier of the second terminal device comprises a source layer 2 identifier of the second terminal device.

28. The method according to any one of claims 25 to 27, further comprising:
receiving a measurement report message from a first terminal device, wherein the measurement report message comprises the identifier of the second terminal device, and the second configuration information is determined based on the identifier of the second terminal device and the first indication information.

29. The method according to any one of claims 25 to 28, further comprising:
sending third indication information to the second terminal device, wherein the third indication information indicates capability information of a network device, and the capability information of the network device comprises information indicating that the network device supports multi-path relay and/or information indicating that the network device supports single-path relay.

30. The method according to any one of claims 1 to 29, wherein the capability information of the second terminal device comprises one of the following: information indicating that the second terminal device supports only multi-path relay, information indicating that the second terminal device supports only single-path relay, and information indicating that the second terminal device supports multi-path relay and single-path relay.

31. The method according to any one of claims 1 to 30, wherein that the second terminal device supports multi-path relay comprises: the second terminal device supports the first terminal device in communicating with the network device through the second terminal device, and supports the first terminal device in directly communicating with the network device; or the second terminal device supports the first terminal device in communicating with the network device through the second terminal device, and supports the first terminal device in communicating with the network device through a third terminal device; and
that the second terminal device supports single-path relay comprises: the second terminal device supports the first terminal device in communicating with the network device through the second terminal device.

32. A communication apparatus, comprising a processing unit and a transceiver unit, wherein
the transceiver unit is configured to receive first indication information from a second terminal device, wherein the first indication information indicates capability information of the second terminal device, and the capability information of the second terminal device comprises information indicating that the second terminal device supports multi-path relay and/or information indicating that the second terminal device supports single-path relay;
the processing unit is configured to generate second indication information, wherein the second indication information indicates the capability information of the second terminal device; and
the transceiver unit is further configured to send the second indication information to a network device.

33. The apparatus according to claim 32, wherein when sending the second indication information to the network device, the transceiver unit is specifically configured to:
send an identifier of the second terminal device to the network device, wherein the identifier of the second terminal device is associated with the second indication information.

34. The apparatus according to claim 33, wherein the identifier of the second terminal device comprises a source layer 2 identifier of the second terminal device.

35. The apparatus according to any one of claims 32 to 34, wherein the transceiver unit is further configured to:
send request information to the network device, wherein the request information is used to request to perform multi-path relay.

36. The apparatus according to any one of claims 32 to 35, wherein the transceiver unit is further configured to:
receive first configuration information from the network device, wherein the first configuration information indicates to perform multi-path relay or single-path relay, and the first configuration information comprises the identifier of the second terminal device.

37. The apparatus according to any one of claims 32 to 36, wherein a destination layer 2 identifier of a first message is associated with the first indication information, and the first message is used to discover the second terminal device.

38. The apparatus according to any one of claims 32 to 37, wherein the transceiver unit is further configured to:
determine the second indication information based on the first indication information.

39. The apparatus according to any one of claims 32 to 38, wherein the transceiver unit is further configured to:
receive third indication information from the network device, wherein the third indication information indicates capability information of the network device, and the capability information of the network device comprises information indicating that the network device supports multi-path relay and/or information indicating that the network device supports single-path relay.

40. The apparatus according to claim 39, wherein the transceiver unit is further configured to:
when the capability information of the network device comprises the information indicating that the network device supports multi-path relay, send the second indication information to the network device.

41. A communication apparatus, comprising a processing unit and a transceiver unit, wherein the processing unit is configured to determine first indication information, wherein the first indication information indicates capability information of a second terminal device, and the capability information of the second terminal device comprises information indicating that the second terminal device supports multi-path relay and/or information indicating that the second terminal device supports single-path relay; and
the transceiver unit is configured to send the first indication information to a first terminal device.

42. The apparatus according to claim 41, wherein a destination layer 2 identifier of a first message is associated with the first indication information, and the first message is used to discover the second terminal device.

43. The apparatus according to claim 41 or 42, wherein the first indication information is indicated by a network device.

44. The apparatus according to any one of claims 41 to 43, wherein the first indication information is determined based on at least one of a quantity of unicast connections and a channel busy ratio.

45. A communication apparatus, comprising a processing unit and a transceiver unit, wherein the transceiver unit is configured to receive second indication information from a first terminal device, wherein the second indication information indicates capability information of a second terminal device, and the capability information of the second terminal device comprises information indicating that the second terminal device supports multi-path relay and/or information indicating that the second terminal device supports single-path relay;
the processing unit is configured to generate first configuration information, wherein the first configuration information indicates the first terminal device to perform multi-path relay or single-path relay, and the first configuration information comprises an identifier of the second terminal device; and
the transceiver unit is further configured to send the first configuration information to the first terminal device.

46. The apparatus according to claim 45, wherein when receiving the second indication information from the first terminal device, the transceiver unit is specifically configured to:
receive the identifier of the second terminal device, wherein the identifier of the second terminal device is associated with the second indication information.

47. The apparatus according to claim 46, wherein the identifier of the second terminal device comprises a source layer 2 identifier of the second terminal device.

48. The apparatus according to any one of claims 45 to 47, wherein the transceiver unit is further configured to:
receive request information from the first terminal device, wherein the request information is used to request to perform multi-path relay.

49. The apparatus according to any one of claims 45 to 48, wherein a destination layer 2 identifier of a first message is associated with first indication information, and the first message is used to discover the second terminal device.

50. The apparatus according to any one of claims 45 to 49, wherein the transceiver unit is further configured to:
send third indication information to the first terminal device, wherein the third indication information indicates capability information of a network device, and the capability information of the network device comprises information indicating that the network device supports multi-path relay and/or information indicating that the network device supports single-path relay.

51. A communication apparatus, comprising a processing unit and a transceiver unit, wherein the transceiver unit is configured to send first indication information to a network device, wherein the first indication information indicates capability information of a second terminal device, and the capability information of the second terminal device comprises information indicating that the second terminal device supports multi-path relay and/or information indicating that the second terminal device supports single-path relay;
the processing unit is configured to generate second configuration information, wherein the second configuration information indicates the second terminal device to perform multi-path relay or single-path relay; and
the transceiver unit is further configured to receive the second configuration information from the network device.

52. The apparatus according to claim 51, wherein when sending the first indication information to the network device, the transceiver unit is specifically configured to:
send an identifier of the second terminal device to the network device, wherein the identifier of the second terminal device is associated with the first indication information.

53. The apparatus according to claim 52, wherein the identifier of the second terminal device comprises a source layer 2 identifier of the second terminal device.

54. The apparatus according to any one of claims 51 to 53, wherein the transceiver unit is further configured to:
receive third indication information from the network device, wherein the third indication information indicates capability information of the network device, and the capability information of the network device comprises information indicating that the network device supports multi-path relay and/or information indicating that the network device supports single-path relay.

55. The apparatus according to claim 54, wherein the transceiver unit is further configured to:
when the capability information of the network device comprises the information indicating that the network device supports multi-path relay, send the first indication information to the network device.

56. A communication apparatus, comprising a processing unit and a transceiver unit, wherein
the transceiver unit is configured to receive first indication information from a second terminal device, wherein the first indication information indicates capability information of the second terminal device, and the capability information of the second terminal device comprises information indicating that the second terminal device supports multi-path relay and/or information indicating that the second terminal device supports single-path relay;
the processing unit is configured to generate second configuration information, wherein the second configuration information indicates the second terminal device to perform multi-path relay or single-path relay; and
the transceiver unit is further configured to send the second configuration information to the second terminal device.

57. The apparatus according to claim 56, wherein when receiving the first indication information from the second terminal device, the transceiver unit is specifically configured to:
receive an identifier of the second terminal device from the second terminal device, wherein the identifier of the second terminal device is associated with the first indication information.

58. The apparatus according to claim 57, wherein the identifier of the second terminal device comprises a source layer 2 identifier of the second terminal device.

59. The apparatus according to any one of claims 56 to 58, wherein the transceiver unit is further configured to:
receive a measurement report message from a first terminal device, wherein the measurement report message comprises the identifier of the second terminal device, and the second configuration information is determined based on the identifier of the second terminal device and the first indication information.

60. The apparatus according to any one of claims 56 to 59, wherein the transceiver unit is further configured to:
send third indication information to the second terminal device, wherein the third indication information indicates capability information of a network device, and the capability information of the network device comprises information indicating that the network device supports multi-path relay and/or information indicating that the network device supports single-path relay.

61. The apparatus according to any one of claims 32 to 60, wherein the capability information of the second terminal device comprises one of the following: information indicating that the second terminal device supports only multi-path relay, information indicating that the second terminal device supports only single-path relay, and information indicating that the second terminal device supports multi-path relay and single-path relay.

62. The apparatus according to any one of claims 32 to 61, wherein that the second terminal device supports multi-path relay comprises: the second terminal device supports the first terminal device in communicating with the network device through the second terminal device, and supports the first terminal device in directly communicating with the network device; or the second terminal device supports the first terminal device in communicating with the network device through the second terminal device, and supports the first terminal device in communicating with the network device through a third terminal device; and
that the second terminal device supports single-path relay comprises: the second terminal device supports the first terminal device in communicating with the network device through the second terminal device.

63. A communication apparatus, wherein the apparatus comprises a processor and a memory, wherein
the memory is configured to store a computer program or instructions; and
the processor is configured to execute the computer program or the instructions in the memory, to enable the apparatus to perform the method according to any one of claims 1 to 9 or claim 30 or 31, the method according to any one of claims 10 to 13 or claim 30 or 31, the method according to any one of claims 14 to 19 or claim 30 or 31, the method according to any one of claims 20 to 24 or claim 30 or 31, or the method according to any one of claims 25 to 31.

64. A computer-readable storage medium, wherein the computer-readable storage medium stores computer-executable instructions, and when the computer-executable instructions are invoked by an electronic apparatus, the electronic apparatus is enabled to perform the method according to any one of claims 1 to 9 or claim 30 or 31, the method according to any one of claims 10 to 13 or claim 30 or 31, the method according to any one of claims 14 to 19 or claim 30 or 31, the method according to any one of claims 20 to 24 or claim 30 or 31, or the method according to any one of claims 25 to 31.

65. A computer program product, comprising computer-executable instructions, wherein when the computer-executable instructions are run on a computer, the computer is enabled to perform the method according to any one of claims 1 to 9 or claim 30 or 31, the method according to any one of claims 10 to 13 or claim 30 or 31, the method according to any one of claims 14 to 19 or claim 30 or 31, the method according to any one of claims 20 to 24 or claim 30 or 31, or the method according to any one of claims 25 to 31.

66. A communication system, comprising the apparatus according to any one of claims 32 to 40 or claim 61 or 62 and the apparatus according to any one of claims 41 to 44 or claim 61 or 62.

67. The communication system according to claim 66, wherein the communication system further comprises the apparatus according to any one of claims 45 to 50 or claim 61 or 62.

68. A communication system, comprising the apparatus according to any one of claims 51 to 55 or claim 61 or 62 and the apparatus according to any one of claims 56 to 62.

69. A chip system, wherein the chip system comprises a processor, wherein
the processor is configured to perform the method according to any one of claims 1 to 9 or claim 30 or 31, the method according to any one of claims 10 to 13 or claim 30 or 31, the method according to any one of claims 14 to 19 or claim 30 or 31, the method according to any one of claims 20 to 24 or claim 30 or 31, or the method according to any one of claims 25 to 31.
